# EUROPÄISCHE PATENTSCHRIFT

(11) **EP 1 171 768 B1**
(45) Veröffentlichungstag und Bekanntmachung des Hinweises auf die Patenterteilung: **02.11.2005**
(21) Anmeldenummer: 00920704.4
(22) Anmeldetag: 14.04.2000
(51) Int. Cl.: G01N 33/543, B01J 19/00

(54) **VERFAHREN ZUM HERSTELLEN VON DETEKTIONSSYSTEMEN MIT PLANAREN ARRAYS**
METHOD FOR PRODUCING DETECTION SYSTEMS WITH PLANAR ARRAYS
PROCEDE DE REALISATION DE SYSTEMES DE DETECTION AVEC RESEAUX PLANS

(30) Priorität: 14.04.1999 DE 19916867
(43) Veröffentlichungstag der Anmeldung: 16.01.2002
(73) Patentinhaber: Fraunhofer-Gesellschaft zur Förderung der angewandten Forschung e.V., 80686 München (DE); SIEMENS AKTIENGESELLSCHAFT, 80333 München (DE)
(72) Erfinder: BREDEHORST, Reinhard, D-20255 Hamburg (DE); HINTSCHE, Rainer, D-13127 Berlin (DE); SEITZ, René, D-25524 Itzehoe (DE); GUMBRECHT, Walter, D-91074 Herzogenaurach (DE)
(74) Vertreter: Olgemöller, Luitgard Maria
(86) Internationale Anmeldenummer: PCT/EP2000/003398
(87) Internationale Veröffentlichungsnummer: WO 2000/067026

(56) Entgegenhaltungen:
- WO-A-98/23957
- DE-A- 19 646 505
- DE-C- 19 706 570
- US-A- 5 653 939
- G. BIDAN ET AL.: "Conducting polymers as a link between biomolecules and microelectronics" SYNTHETIC METALS, Bd. 102, 1999, Seiten 1363-1365, XP002114817 LAUSANNE, CH ISSN: 0379-6779

## Beschreibung

Die Erfindung betrifft die Herstellung planarer Substrate oder planarer Sensorelemente, auf denen flächig abgegrenzt voneinander gleiche oder verschiedene Biomoleküle als sogenannte Arrays immobilisiert angeordnet sind. Diese Anordnung findet als Teil von Meßeinrichtungen bevorzugt in der chemischen Analytik, in der Biotechnologie und in der industriellen Prozeßkontrolle Verwendung. Außerdem betrifft die Erfindung Substrate oder Sensorelemente, in denen ein planares Substrat mit einer spezifisch strukturierten Schicht oder Lage derart teilweise bedeckt ist, daß spezifisch ausgeformte Mikrokompartimente entstehen, in denen die Biomoleküle auf der unbedeckten Substratoberfläche immobilisiert werden können. Die genannte, spezifisch strukturierte Schicht oder Lage kann ggf. wieder vom Substrat entfernt werden, wobei die obigen planaren Substrate oder Sensorelemente entstehen.

Zur Immobilisierung und Lokalisierung verschiedener Arten chemischer Spezies in kleinen, lokalen Arealen sind seit langem Mikroreaktoren, Mikrokompartimente oder Mikrokavitäten bekannt, die in Silizium und Glas mit Standardverfahren der Mikrosystemtechnik erzeugt werden, z.B. als geätzte Strukturen in Si- oder Glas-Mikrosystemtechnologie sowie in Kunststoffen über Prägeverfahren. Bekannt ist auch eine fotolithografische Technik zur Erzeugung kleinster separierter Mikroaktivitäten in Polystyrol. Auch die geätzten Enden in Polymere eingebetteter Faserbündel wurden bereits als Mikrokavitäten genutzt.

Im US Patent 5605662 ist die Bildung mikrostrukturierter, von Wänden des Substrates umgebener Areale mit gelbedeckten Elektroden zur Aufnahme verschiedener Moleküle, z.B. Nucleotide, beschrieben und die Beschickung mit Flüssigkeiten aufgezeigt.

Charakteristische Nachteile der vorstehend beschriebenen dauerhaften Mikrokavitäten bzw. Kompartimentstrukturen, die in der Regel eine einfache Geometrie besitzen (eckige oder runde "Vertiefungen"), zur Herstellung von Bioarrays sind die bestehenden mechanischen Hindernisse auf der Oberfläche der Substrate. Notwendige gleichmäßige Reagentienzuführung bzw. Spülvorgänge können in Mikrokavitäten schlecht realisiert werden, da hohe Kapillarkräfte den Flüssigkeitsaustausch behindern können und so bei aufeinanderfolgenden Reaktionsschritten unerwünschte Verunreinigungen bewirken. Darüber hinaus wird die Befüllung der Mikrokavitäten besonders bei Si- und Glasoberflächen durch Luftblasenbildung erschwert. Technologische Schwierigkeiten und Kostennachteile entstehen insbesondere, wenn es notwendig ist, chemische oder physikalische Sensorelemente in oder unter die Mikrokavitäten individuell zu plazieren. Ein weiterer Nachteil der dauerhaft volumenkompartimentierten Mikroarrays mit der genannten einfachen Geometrie ist die Schwierigkeit, Analyte homogen und gleichmäßig in alle Mikrokompartimente zu verteilen und gegebenenfalls wieder zu entfernen.

In Science 264 (1994) 696 wurde von R. Shighvi et al. eine elastomerer Polysiloxan-Stempel zur Abformung mittels fotolithografischer Techniken beschrieben, mit dem durch Drucken und Abstraktionsverfahren mittels thiolderivatisierter Fettsäuren molekülstrukturierte Arrays hergestellt werden können. Durch das Abstempeln dieses Stempels auf Goldsubstraten können sich selbstorganisierte monomolekulare Schichten entsprechend der Form des Stempels ausbilden, die als Barriere für aufwachsenden Zellen nutzbar sind. Eine Weiterentwicklung dieser Technologie, auch Microcontact-printing genannt, wird in Nanotechnology 7(1996) 452 beschrieben. Dabei können Goldflächen durch Stempel mit Monomoleküllagen beschichtet und als Schutz vor chemischem Abätzen genutzt werden, um zwischen den Stempelbereichen liegende Substratgebiete bis in den nm-Bereich zu strukturieren. Zusätzlich können danach von Gold und Metall befreite Flächen im Silizium oder Glas chemisch geätzt werden, so daß mikromechanisch erzeugte Vertiefungen oder Mikrokompartimente mit Geometrien zwischen wenigen nm und einigen µm gefertigt werden können. Eine weitere Variante dieses Mikrokontaktprintings wird in Kombination mit Trockenätzverfahren beschrieben [Nanotechnology 7 (1996) 447].

Vom makroskopischen Auftupfen ist das Aufsetzen miniaturisierter Ringe auf Chipoberflächen abgeleitet, auf die vorher entsprechende Moleküle durch Tauchen aufgebracht wurden [S.D. Rose, J. Ass. Lab.Autom. 3, 3 (1998) 53]. Die Kontaminationsgefahr ist bei dieser Methode erheblich.

Das sogenannte Mikrokontaktdrucken, d.h. das Übertragen von Molekülen mittels Mikrostempel, wurde von A. Kumar und G.M. Whitesidess [Appl. Phys. Lett. 63 (1993) 2002] beschrieben.

Nachteile der Stempeltechniken sind mangelnde Kantenpräzision und Inhomogenitäten bei der Flächenverteilung der Moleküle insbesondere mit zunehmender Stempelfläche.

Lokalisierte Substanzarrays können auch durch die Verwendung einer Mikrovemebelungstechnik erzeugt werden. Die lokalisierte Aufbringung kleinster mikroskopischer Tropfen von Flüssigkeiten mit verschiedenen Substanzen ist ebenso auf strukturierte, sogenannte "self assembled monolayers" möglich. Auch die Befüllung mit Mikrotröpfchen nach Art der allgemein bekannten Tintenstrahldrucktechniken ist üblich und wird häufig verwendet; analoge Tintenstrahltechnologie wird ferner zum Absetzen von sogenannten Mikrospots auf planare Träger und Transducer eingesetzt.

Das sogenannte Mikrokontaktdrucken, d.h. das Übertragen von Molekülen mittels Mikrostempeln, wurde von A. Kumar und G.M. Whitesidess [Appl. Phys. Lett. 63 (1993) 2002] beschrieben.

Für die Erzeugung von planaren Arrays mit unterschiedlichen immobilisierten Molekülen beschreiben Blanchard et al., Biosensors & Bioelectronics 11 (1996) 687, das Absetzen von Flüssigkeitstropfen mit Tintenstrahldrucktechnologie auf ca. 100µm große Kreisflächen mit hydrophilen Oberflächeneigenschaften, die durch ca. 30µm breite Bereiche mit hydrophoben Oberflächeneigenschaften getrennt sind. Durch die schlechtere Benetzbarkeit der hydrophoben Bereiche mit wäßrigen Flüssigkeiten soll die Vermischung benachbarter Tropfen verhindert werden. Da hydrophile und hydrophobe Bereiche keine Höhenunterschiede aufweisen, bleibt die Gefahr mechanisch verursachter Kontamination besonders bei den angestrebten schnellen und automatisierten Verfahren der Beschickung bestehen und schränkt die Anwendbarkeit ein.

Bei den beschriebenen Verfahren zur Arrayerzeugung auf planaren Elementen mit den genannten Mikrospot-, Nebel- oder Druckverfahren ist rasches Antrocknen der verwendeten Flüssigkeiten und Reaktionspartner notwendig, um eine Vermischung zu vermeiden. Probleme dieser Verfahren sind geometrische Unregelmäßigkeiten der Spots, die Unmöglichkeit quantitativer Dosierung auf individuellen Positionen und die Einschränkung der anwendbaren Kopplungsreaktionen in flüssiger Phase sowie die mögliche Verschleppung von Substanzen zwischen einzelnen Arraypositionen.

Ein weiteres Verfahren zum strukturierten Belegen von Oberflächen ist die fotochemisch induzierte Bindung von Molekülen oder Molekülketten an laseraktivierte Mikroflächen [A.C. Pease et al., Proc. Natl. Acad. Sci., USA 91 (1994), 5022]. Organische Haft- und Kopplungsschichten können außerdem selektiv mit Hilfe der Elektropolymerisation aufgebracht werden, beispielsweise für die Bindung von Ferrocenen auf Platinelektroden.

Eine neuere Methode zur Herstellung und zum Füllen von Mikrokavitäten in nm- und µm-Dimensionen ist die sog. "Dewetting"-Technik, die Kapillarkräfte zum Befüllen und das Abfließen der Flüssigkeit von der planaren Oberfläche nutzt [Whitesides et al., Anal. Chem. 70 (1998) 2280].

Durch perforierte Membranen, die mit Hilfe eines Stempels auf Chipoberflächen aufgedrückt werden, sind an den offenen Stellen Immobilisierungsreaktionen an den Oberflächen in flüssiger Phase möglich [E. Ermantraut et al., Proc. of µTAS'98, Alberta, Can., 1998, p. 217]. Dieses Verfahren birgt Kontaminationsprobleme durch Kapillarkräfte zwischen Stempel und Arrayoberfläche, die Fehler bei Synthese- oder Immobilisierungsreaktionen hervorrufen können.

R.M. Wadkins et al., Biosensors & Bioelectronics 13 (1998) 407, stellten temporär 0,2mm hohe Mikrokompartimente durch Photostrukturierung eines flüssigen polymeren Klebers her. Manuell wurde mit einem acetongetränkten Wattebausch unvemetzter Kleber nach der Photostruktuierung wieder entfernt. Mit konventionellen Immobilisierungsverfahren wurden dann verschiedene Antikörper an den Boden der Kompartimente gebunden. Später wurden die Kompartimente durch Ablösen mit Protein-Salzlösung wieder beseitigt. Die Analytbestimmung erfolgte durch Bestrahlen der immobilisierten Probe mit einem Laser, wobei reflektiertes Licht nach Durchlaufen optischer Anordnungen (Gitter, Filter) analysiert wurde.

Das von Wadkins et al. vorgeschlagene Verfahren ist aufgrund der manuellen Schritte für eine Massenfertigung mit industriellen Standardmethoden z.B. auf Wafern nicht geeignet. Außerdem ist von Nachteil, daß das Meßsignal, das von der Probe genommen wird, nicht direkt am Ort der Immobilisierung aufgefangen werden kann.

Die Bewertung der beschriebenen Verfahren zur Bioarraykonstruktion zeigt den Bedarf für eine Optimierung in Bezug auf technologisch kompatible und leistungsfähige Dosierverfahren ohne Kontaminationsprobleme in Verbindung mit einer günstigen Handhabung des fertiggestellten Arrays in Flüssigkeiten.

Die Modifizierung und Belegung anorganischer Oberflächen mit monomeren und insbesondere mit polymeren Biomolekülen wird im Stand der Technik in unterschiedlicher Art und Weise durchgeführt, wobei diese als Einzelschicht oder als Multilayer z.B. durch kovalente Anbindung, Adsorption, Einlagerung in Polymere oder als kristalline Filme aufgebracht werden.

Zur chemischen Anbindung werden die anorganischen Oberflächen der Basissubstrate z.B. mit bifunktionellen Reagenzien behandelt, um die Oberflächen mit chemischen Funktionen zu versehen, welche mit Biomolekülen reagieren können. Die nachfolgende Anbindung der Biomoleküle kann zum einen in direkter Weise oder auch zum anderen in indirekter Weise unter Verwendung weiterer homo- oder heterobifunktioneller Moleküle an die derivatisierte Oberfläche erfolgen [C.F. Mandenius et al., Methods in Enzymology 137 (1988) 388].

Weit verbreitet ist die Haftschichterzeugung auf Oberflächen mit funktionalisierten Silanen als Monoschichten [C.M. Fischer et al., Europhysics Letters 28 (2) (1994) 129-134] oder über gasförmig oder in flüssiger Phase aufgebrachte quervernetzte Schichten [R.A. Williams et al., Biosensors & Bioelectronics 9 (1994) 159]. An diese Silanderivate, die Amino-, Thiol-, Aldehyd-, Hydroxyl-, Carboxyl- oder andere funktionelle Gruppen tragen können, werden, meist mit Hilfe von Crosslinking-Techniken [H. G. Bäumert and H. Fasold, Methods in Enzymology, Vol. 172, p. 584] verschiedenste andere Verbindungen mit passenden reaktiven Gruppen kovalent gebunden. Auf diese Weise sind alle als affinitätsbindende Fängermoleküle geeigneten bioaktiven Substanzen wie Oligonucleotide, Peptide, Haptene und dergleichen auf den Elektrodenflächen zu immobilisieren.

Die aufgezeigten Verfahren und die Verfahren gemäss der Druckschriffen WO 09823957 und DE 19706570 stehen für Standardmethoden, die es erlauben, DNA, Oligonucleotide, Proteine und andere Moleküle auf Arraypositionen zu immobilisieren.

Aufgabe der vorliegenden Erfindung ist es, ein Verfahren zur Verfügung zu stellen, das es gestattet, auf planaren Substraten Bioarrays mit an der Substratoberfläche haftenden Fängermolekülen ("Detektionssysteme") auszubilden, das technologisch einfach und/oder kompatibel zur mikroelektronischen Chipherstellung ist. Die so hergestellten Substrate oder Biosensoren sollen im Waferverband die Immobilisierung von Biomolekülen erlauben, Kontaminationsprobleme minimieren und homogen zugänglich und unproblematisch für die fluidische Handhabung sein. Das Verfahren soll zu Substraten oder Biosensoren ("Detektionssystemen") führen, mit deren Hilfe auf sehr kleinem Raum entweder eine Vielzahl von Proben auf das Vorhandensein einer zu detektierenden Substanz ("Analyt") oder eine Probe auf das Vorhandensein einer Vielzahl von Substanzen ("Analyten") untersucht werden kann.

In speziellen Ausgestaltungen der Erfindung ist darüberhinaus die Aufgabe zu lösen, mit Hilfe des genannten Verfahrens intermediäre Ausgestaltungen der Detektionssysteme bereitzustellen, die aufgrund geometrischer Gegebenheiten spezielle Vorteile aufweisen.

Erfindungsgemäß wird die Aufgabe durch ein Verfahren zum Herstellen eines Detektionssystems zur Detektion unterschiedlicher Analyte in einer Probe oder zur Detektion eines Analyten in einer Vielzahl von Proben gelöst, wobei das Detektionssystem eine ebene oder im wesentlichen ebene Substratoberfläche und auf dieser Ebene angeordnete Arrays von gleichen oder unterschiedlichen, Analyt bindenden Fängermolekülen aufweist, gekennzeichnet durch die folgenden Schritte:
(a) Bereitstellen eines planaren oder im wesentlichen planaren Substrats mit Sensoren zur optischen oder elektrischen Detektion,
(b) Aufbringen einer Schicht auf das Substrat, die entweder bereits mikrostrukturiert ist, oder Aufbringen einer durchgehenden Schicht auf das Substrat und Mikrostrukturieren der Schicht, jeweils derart, daß voneinander getrennte Bereiche des Substrats nicht von der Schicht bedeckt sind, wobei Schicht und Substrat zumindest um die unbedeckten Bereiche herum dichtend miteinander verbunden sind,
(c) In-Kontakt-Bringen zumindest eines Teils der unbedeckten Bereiche mit mindestens einer Fängermoleküle enthaltenden Flüssigkeit, wobei die Fängermoleküle in der Lage sind, an der Substratoberfläche und/oder auf der Oberfläche der Sensoren zu haften oder daran zu binden,
(d) Entfernen der nicht haftenden oder gebundenen Bestandteile der Flüssigkeit.
(e) Entfernen der mikrostrukturierten Schicht oder von Teilen dieser Schicht.

Die voneinander getrennten Bereiche des Substrats, die nicht von der Schicht bedeckt sind, können auch als Mikrokompartimente bezeichnet werden. In Schritt (b) entstehen solche Mikrokompartimente, die durch die sie umgebenden Teile der Schicht eine seitliche Begrenzung aufweisen, also durch mechanische Barrieren voneinander getrennt sind. Diese Begrenzung oder Barriere wird durch Schritt (e) wieder eliminiert, so daß sich nach diesem Schritt die Mikrokompartimente in Form von mit Fängermolekülen besetzten Bereichen, die auch als (Bio-)Arrays bezeichnet werden, ohne seitliche Begrenzung auf der Substratoberfläche bzw. der Oberfläche der Sensoren befinden.

Unter dem Ausdruck "Fängermoleküle" sind diejenigen Substanzen zu verstehen, die sich auf der Oberfläche des Substrates und/oder der Sensoren immobilisieren lassen, wobei die Art der Immobilisierung frei wählbar ist; dem Fachmann steht hier eine breite Palette von Möglichkeiten zur Verfügung, die teilweise auch in der Einleitung dieser Anmeldung erwähnt wurde. Die Immobilisierung kann durch chemische Bindung oder durch Adhäsion oder dgl. erfolgen; sie kann direkt oder unter Zuhilfenahme von weiteren Substanzen erfolgen, mit denen geeignete chemische Gruppen auf der Substrat- bzw. Sensoroberfläche bereitgestellt werden. Der Ausdruck "Fängermoleküle " soll weiterhin besagen, daß diese Substanzen geeignete Gruppen aufweisen, um - direkt oder unter Einbeziehung weiterer Substanzen - den Analyten in ihrer Nähe zu halten. Dabei kann dieser chemisch oder physikalisch "gefangen" oder gebunden werden; neben chemischer Bindung können also auch Van-der-Waals-Bindungen, Adhäsion oder dgl. Ursache für den Verbleib des Analyten in der Nähe der Fängermoleküle sein. Auch diesbezüglich sind eine Reihe der dem Fachmann zur Verfügung stehenden Substanzen in der Einleitung dieser Anmeldung aufgeführt. Die erwähnten Möglichkeiten sollen aber nicht einschränkend verstanden werden.

Die Sensoren können in oder auf der Substratoberfläche liegen, d.h. als dünne Struktur darauf aufgebracht oder in die Substratoberfläche eingegraben oder auf andere Weise so darin angeordnet sein, daß die Substratoberfläche eben ist. Da die Sensorstrukturen insbesondere dann, wenn Sensoren für die elektrische Detektion vorgesehen sind, meist extrem dünn sind, umfassen die Ausdrücke "planare Substratoberfläche" oder "ebene Substratoberfläche" selbstverständlich auch solche Substratoberflächen, bei denen die Sensoren auf dem eigentlichen Substrat, z.B. einem Siliciumwafer, aufliegen.

Wenn es sich bei den Sensoren um Sensoren für die elektrische Detektion handelt, was bevorzugt ist, können bevorzugt Transducer, z.B. Elektroden oder Feldeffekttransistoren, eingesetzt werden. Statt dessen können auch optische, ggf. auch chemische Sensoren verwendet werden. Vorzugsweise wird die Schicht gemäß Schritt (b) so aufgebracht und/oder ist oder wird so strukturiert, daß die Orte auf der Substratoberfläche, an denen sich die Sensoren befinden, nicht von der Schicht bedeckt werden. In dieser Ausgestaltung der Erfindung erhält man Mikrokompartimente und mit Fängermolekülen besetzte Arrays, in denen sich die Sensoren für die optische oder elektrische Detektion in unmittelbarem Kontakt oder zumindest in nächster Nachbarschaft zu den Fängermolekülen und damit bei der Messung auch zu den zu detektierenden Analyten bzw. Fängermolekül/Analyt-Komplexen oder -Kombinationen befinden.

Die Erfindung stellt damit Detektionssysteme mit Mikrokompartimenten oder Mikrokapillarreaktoren bereit, in denen Molekülimmobilisierungen in Massenfertigung realisiert werden können, die aber nach erfolgter Bindung von Molekülen vom Träger oder Sensor wieder entfernt werden.

Des weiteren stellt die Erfindung spezielle Detektionssysteme bereit, die mit Hilfe der Schritte (a) bis (d) des oben aufgeführten Verfahrens erhalten werden können, während auf die Entfernung der mikrostrukturierten Schicht gemäß Schritt (e) verzichtet werden kann. Diese Detektionssysteme sind durch spezifische Geometrien und ggf. Materialien der gemäß Schritt (b) aufzubringenden Schicht gekennzeichnet.

Preiswerte Herstellung durch Technologien der Halbleiterindustrie sowie komfortable Handhabung sind Vorteile der Erfindung.

Die Erzeugung der gemäß Schritt (b) hergestellten, separierten Mikrokompartimente auf z.B. Siliziumbauelementen ist z.B. dann hilfreich, wenn ein Sensorarray mit unterschiedlichen Molekülen, z.B. DNA oder RNA bzw. ihren Bausteinen oder Proteinen oder Peptiden oder anderen affnitätsbindenden Molekülen, belegt werden soll, insbesondere dann, wenn dabei Flüssigkeitswechsel nötig sind. Im umgekehrten Fall sind solche Kompartimente aber auch dann nötig, wenn in allen Mikrokopartimenten gleichartige Fängermolekülen gebunden werden, die danach mit unterschiedlichen Analyten getestet werden, die unterschiedliche Stoffe oder zu detektierende Stoffgemische enthalten.

Die für die Erfindung geeigneten planaren Substrate können aus üblichen Materialien bestehen, insbesondere aus Silizium, Glas oder Keramik, wobei die erzeugten Mikrokompartimente naßchemische Verfahren zur Erzeugung der molekularen Arrays gestatten, ohne daß gegenseitige Kontaminationen entstehen. Die Erfindung realisiert die Mikrokompartimente vorzugsweise mit Hilfe einer Schicht aus polymeren, aber auch aus mineralischen oder metallischen Materialien. Die bestimmungsgemäßen Arrayflächen auf den Substraten oder Sensorelementen sind dabei durch Öffnungen oder Kanäle für die zu applizierenden Flüssigkeiten zum Aufbringen der Fängermoleküle zugänglich.

In einer besonderen Ausführungsform werden in Schritt (b) voneinander getrennte Bereiche oder Mikrokompartimente geschaffen, wobei jedoch jeweils zwei Mikrokompartimente durch einen Kanal zu einem sogenannten Mikrokapütarreaktor verbunden sind. Diese Mikrokapillarreaktoren sind besonders für komplexe Reaktionen und Flüssigkeitswechsel, gegebenenfalls mittels eines zusätzlichen stempelartigen Flüssigkeitsverteilers, geeignet, u.a. in Hinblick auf das Aufbringen der Fängermoleküle. Nach erfolgter Immobilisierung gleicher oder unterschiedlicher Moleküle und gegebenenfalls Waschprozessen können die Seiten- und Deckwände dieser Mikrokompartimente bzw. Mikrokapillarreaktoren gemäß Schritt (e) entfernt werden. Besonders vorteilhaft ist dabei, daß auf diese Weise alle mechanischen Barrieren für den Flüssigkeitsaustausch zwischen den Arraypositionen beseitigt werden und für die Nutzung des Elementes wichtige Spül-, Wasch- oder Detektionsprozesse beschleunigt und verbessert werden. Erfindungsgemäß ist die Möglichkeit gegeben, durch Prägung und/oder Photolithographie im voraus strukturierte Materialien auf das Substrat oder das Sensorelement aufzubringen und durch Kleben oder Heißsiegeln oder Eigenadhäsion zu fixieren. Alternativ dazu können Folien oder dünne Platten im Ganzen aufgebracht werden. Durch konventionelle lithographische und/oder Ätz-Verfahren werden sie dann an den gewünschten Arraypositionen geöffnet und vom kompartimentbildenden Material befreit.

Die vorliegende Erfindung ist besonders geeignet für Sensorelemente, bei denen Arrays verschiedener Moleküle, Molekülaggregate oder ganzer biologischer Zellen auf die verschiedenen Positionen mit sensitiven optischen oder elektrischen Elementen lokalisiert aufgebracht werden müssen. Ein Vorteil der Erfindung besteht insbesondere darin, daß das Verfahren gut mit der erprobten Silizium-Technologie sowie der automatisierten Flüssigkeitsverteilung mittels Dispenser- oder Tintenstrahlverfahren kombinierbar ist. Die Beseitigung der Seitenbegrenzung der Mikrokompartimente nach erfolgter Molekülarrayausbildung kann durch mechanisches Entfernen oder chemisches Ablösen so schonend erfolgen, daß empfindliche Biomolekülbeschichtungen nicht beeinflußt werden. Nach Entfernung der Polymere ist eine homogene Benetzung mit Flüssigkeiten oder anderen analytischen Medien ohne störende Oberflächenstrukturen möglich. Die gleichen Verfahren können auch benutzt werden, um in allen Mikrokompartimenten oder Mikrokapillarreaktoren im Batchverfahren gleiche Molekülarten zu immobilisieren und sie danach zur analytischen Untersuchung mit unterschiedlichen Analyten bzw. Reaktionspartnern zu beschicken.

In einer besonderen Ausführung werden pemanente Mikrokompartimente mit niedrigem Aspektverhältnis (Höhe/Durchmesser) aufgezeigt, die besondere Schutzvorrichtungen gegen Vermischungen aufweisen.

### Beschreibung der Abbildungen:

- Figur 1: zeigt eine Aufsicht und Schnittbilder eines planaren Sensorarrays mit Mikrokompartimentenen und immobilisierten Molekülen in verschiedenen Stadien des Herstellungsverfahrens;
- Figur 2: zeigt eine Aufsicht und Schnittbilder eines planaren Arrays mit Mikrokapillarreaktoren und immobilisierten Molekülen in verschiedenen Stadien des Herstellungsverfahrens;
- Figur 3: zeigt eine Aufsicht und Schnittbilder eines planaren Sensorarrays mit strukturierten Oberflächen und immobilisierten Molekülen; und
- Figur 4: zeigt eine Aufsicht und Schnittbilder eines Stempels zur Handhabung von Flüssigkeiten auf einem planaren Array.

### Bedeutung der Bezugszeichen

- 1: Substrat
- 2: Dünnfilmelektrode
- 3: Polymerschicht
- 4: Lochmaske
- 5: seitlich begrenztes Mikrokompartiment
- 6: Flüssigkeitstropfen mit Molekülart A
- 7: Flüssigkeitstropfen mit Molekülart B
- 8: Immobilisierte Molekülart A
- 9: Immobilisierte Molekülart B
- 10: Chipkontakt
- 11: Kapillarreaktor-Einlaß
- 12: Kapillarreaktor-Auslaß
- 13: Kapillarreaktor-Kanal
- 14: Photolithographische Maske
- 15: grabenartige Mikrostruktur
- 16: Stempeleinlassöffnung
- 17: Stempelaustassöffnung
- 18: Stempeleinlassverteilerkanal
- 19: Stempelauslassverteilerkanal
- 20: Stempel aus Polymer

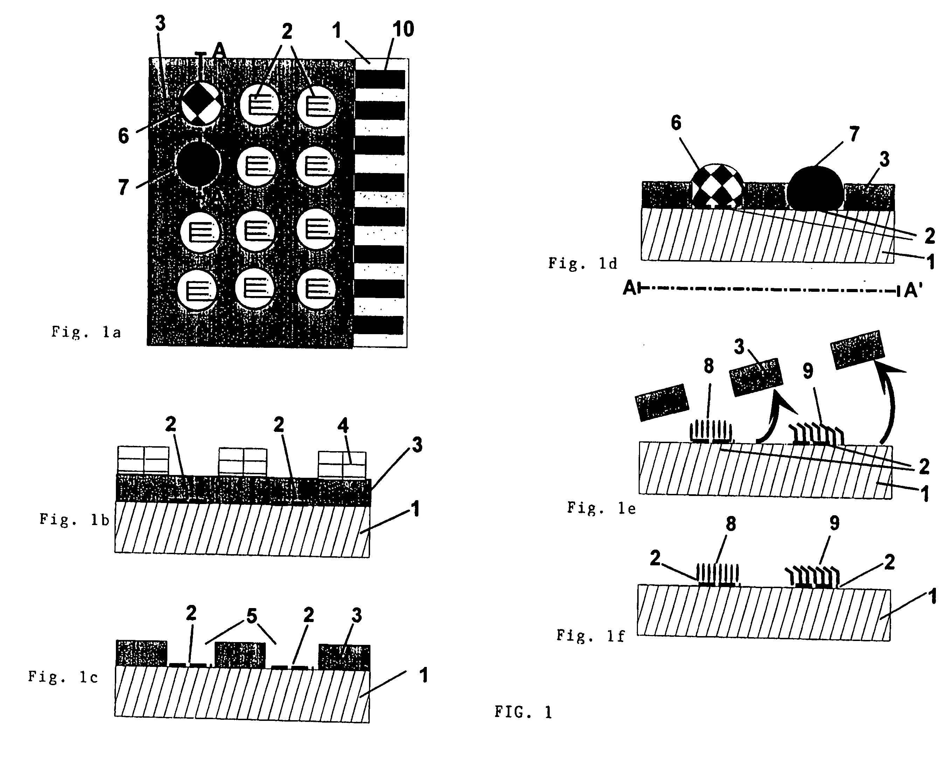

In Figur 1 ist die Erzeugung und Anwendung von Mikrokompartimenten durch eine strukturierte Polymerbeschichtung auf einem Elektrodenarray in Siliziumtechnologie beispielhaft dargestellt. In Figur 1a ist die Aufsicht auf ein Array mit 12 Sensorelektroden 2 auf einem isolierten Siliziumchip 1 dargestellt. Die elektrischen Chipkontakte 10 dienen als Anschlüsse, mit denen die Elektroden 2 elektrisch kontaktiert werden. Die Leitungsbahnen verlaufen dabei nicht sichtbar unterhalb des Polymerfilms 3 und sind separat mit einem Isolator (nicht dargestellt) bedeckt. Mit den Flüssigkeitstropfen 6 und 7 wird die selektive Dosierung in zwei der durch das Polymer 3 gebildeten, seitlich begrenzten Mikrokompartimente illustriert. Die Schnittlinie A-A' in der Figur markiert den Bereich, der in den Figuren 1 b bis 1f dargestellt ist.

Figur 1b zeigt im Ausschnitt das Siliziumsubstrat 1 entlang der Schnittlinie A-A' mit zwei Elektroden 2 als Sensorelementen, die von einer über das gesamte Element aufgebrachten Polymerbeschichtung 3 bedeckt ist. Über diese Polymerschicht ist eine Lochmaske 4 aufgelegt.

Figur 1c zeigt die Anordnung wie in Figur 1 b nach der Entfernung des Polymerfilms 3 an den Stellen der Öffnungen in der Lochmaske mittels Trockenätzverfahren und nachfolgender üblicher Entfernung der photolithographischen Maske 4. Die so mit seitlichen Wandungen ausgebildeten Mikrokompartimente 5 über den Sensorelektroden 2 haben die Gestalt von topfähnlichen Vertiefungen.

Figur 1d zeigt die Anordnung wie in Figur 1c nach selektiver Einbringung bzw. Dosierung der Tropfen 6 und 7 mit gelösten chemischen Spezies A und B.

Figur 1e zeigt die Anordnung wie in Figur 1d nach chemischer Anbindung der Moleküle A 8 und B 9 bei der Ablösung des Polymerfilms 3 vom Elektrodenarray.

Figur 1f zeigt den Ausschnitt wie in Figur 1e nach Ablösung des Polymerfilms 2 und stellt das planare Sensorarray ohne mechanische Barrieren dar, das zur analytischen Anwendung mit immobilisierten Molekülarten A und B benutzt wird.

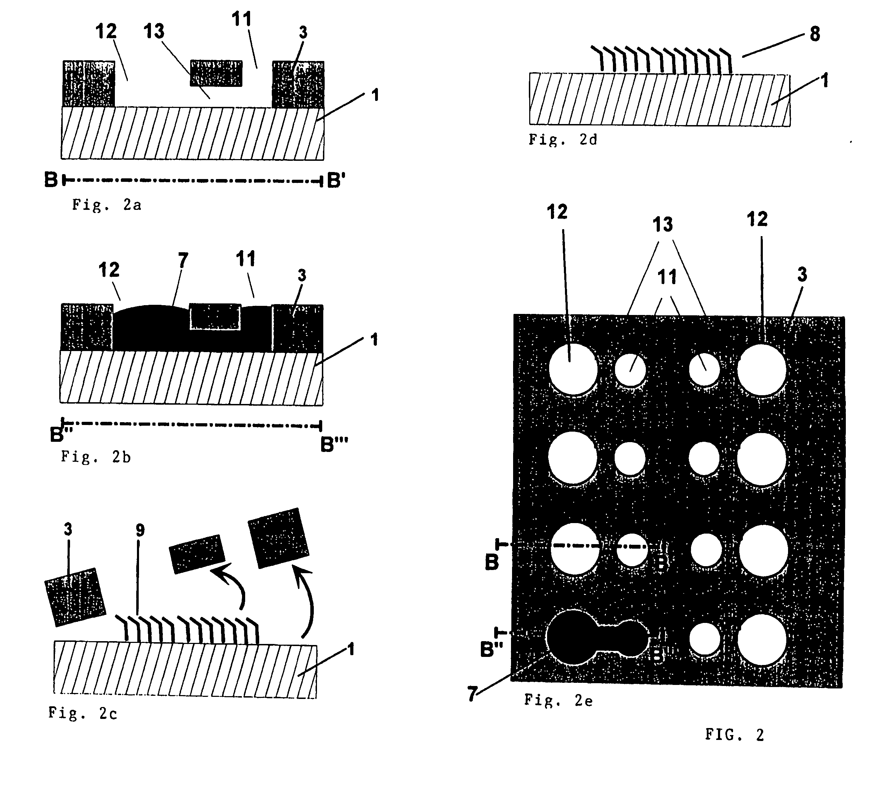

In Figur 2 ist die Ausbildung und Nutzung von Mikrokapillarreaktoren gezeigt. Dazu wird gemäß Figur 2a im Schnitt B-B' nach Figur 2e auf dem Siliziumsubstrat 1 eine zuvor strukturierte Polymerschicht 3 befestigt. Die durch Stanz- und Prägetechniken im Polymeren vorgefertigten Mikrokapillarreaktoren bestehen aus den Ein- und Auslaßöffnungen 11 und 12, die durch einen Kanal 13 miteinander verbunden sind.

In Figur 2b ist der Mikrokapillarreaktor mit einer Lösung 7 durch die Einlaßöffnung 11 befüllt, und die Molekülart B 8 wird am Boden des Mikrokapillarreaktors immobilisiert.

Figur 2c zeigt das mechanische Entfernen der Polymerschicht 3. Es entsteht, wie in Figur 2d gezeigt, ein planares Molekülarray wie vorstehend für Figur 1f beschrieben.

Die Struktur der Mikrokapillarreaktoren wird dabei wieder eliminiert.

Figur 2e zeigt die Aufsicht auf eine Anordnung von Mikrokapillarreaktoren auf einem Chipsubstrat. Neben den Einlaßöffnungen 11 und den Auslaßöffnungen 12 im Polymer 3 sind dabei die von oben nicht sichtbaren Verbindungskanäle 13 durch schwarze Strichlinien angedeutet. Die Schnittlinie B-B' zeigt den Querschnitt, der in Figur 2a dargestellt ist. Die Schnittlinie B"-B''' zeigt einen mit Flüssigkeit 7 befüllten Mikrokapillarreaktor gemäß Figur 2b.

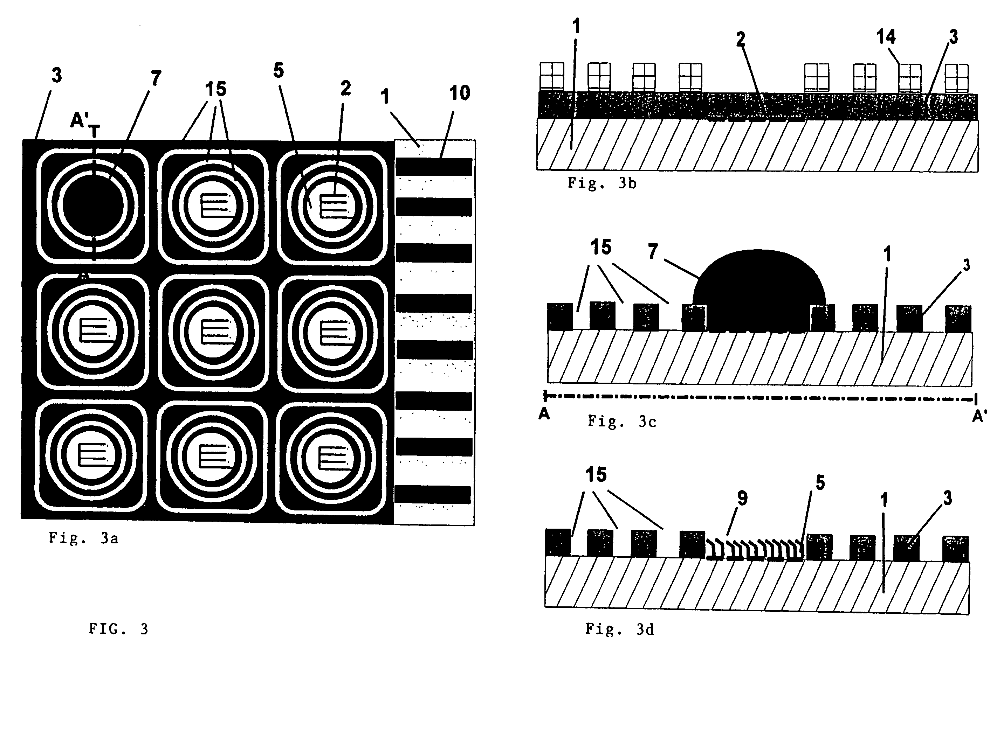

In Figur 3a ist ein planares Sensorarray mit mikrostrukturierter Oberfläche gezeigt. Auf dem planaren Substrat 1 sind neun Mikroelektrodenanordnungen 2 in einer Polymerschicht 3 mit den Sensorarealen 5, den Kontakten 10 sowie einer mit Flüssigkeit 6 befüllten Position bei A-A' und grabenartigen Vertiefungen 15 dargestellt, die sich rund um die Areale 5 erstrecken. Die Querschnitte der Figuren 3b, 3c und 3d entsprechen der Schnittlinie A-A' in Figur 3a. In den Figuren 3b und 3c wird die Herstellung dieser Struktur gezeigt: Das planare Substrat 1 und die Mikroelektrodenanordnung 2 sowie die Polymerschicht 3 sind in Figur 3b mit einer photolithographischen Maske 14 bedeckt. In Figur 3c ist durch Trockenätzen die Mikroelektrodenanordnung 2 im Sensorareal 5 und eine Mikrostruktur mit grabenartigen Vertiefungen 15 freigelegt. Das Sensorareal 5 ist in dieser Darstellung bereits mit einem Tropfen der Flüssigkeit 7 befüllt. Figur 3d stellt einen Ausschnitt eines planaren Arrays mit einer Mikrostruktur aus grabenartigen Vertiefungen 15 in der Polymerschicht 3 und der immobilisierten Molekülart 8 dar.

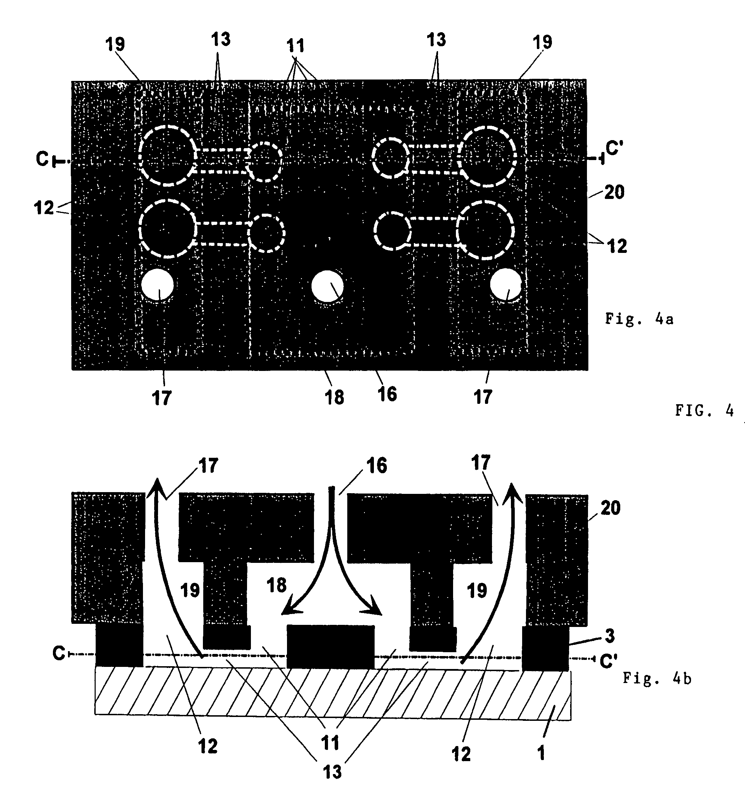

In Figur 4 ist die Ausbildung eines Stempels 20 zur Handhabung von Flüssigkeiten auf planaren Arrays 1 mit Mikrokapillarreaktoren (siehe auch Figur 2) gezeigt. In Figur 4a ist die Aufsicht auf einen Stempel dargestellt, mit dem das Substrat mit den Mikrokapillarreaktoren, wie sie in Figur 2d dargestellt sind, ganz oder teilweise bedeckt werden kann. In der Aufsicht Figur 4a sind dabei eine Einlaßöffnung 16 und zwei Auslaßöffnungen 17 zu sehen. Die schwarzen Linien markieren die Hohlräume innerhalb des Stempels, die gemäß Figur 4b Einlaßverteilerkanäle 18 und zwei Auslaßverteilerkanäle 19 darstellen. Die weißen Strichlinien zeigen an, wie die Mikrokapillarreaktoren nach Figur 2d unter dem Stempel angeordnet sind. Im Querschnitt Figur 4b ist ein Stempel 20 auf einen Sensorarray 1 mit den Mikrokapillarreaktoren aufgesetzt. Die Einlaßöffnung 16 des Stempels ist über den Einlaßverteilerkanal 18 und den Einlaßöffnungen 11 der Mikrokapillarreaktoren angeordnet. Oberhalb der Auslaßöffnungen 12 der Mikrokapillarreaktoren befinden sich Auslaßverteilerkanäle 19, die alle Auslaßöffnungen 12 mit den Auslaßöffnungen 17 des Stempels verbinden. Bei Applikation von Flüssigkeiten werden durch die Einlaßöffnungen 16 des Stempels über die Einlaßverteilerkanäle 16 und die Einlaßöffnung 16 die Mikrokompartimente gefüllt. Durch die Verbindungskanäle 13 der Mikrokapillarreaktoren fließt die Flüssigkeit über die Auslaßöffnungen 12 in die Auslaßverteilerkanäle 19 des Stempels zu den Auslaßöffnungen 17 des Stempels, an denen die Flüssigkeit wieder entnommen werden kann.

### Detaillierte Erfindungsbeschreibung

Ein wesentliches Prinzip der Erfindung besteht darin, daß auf einem planaren Substrat, z.B. aus Silizium, Glas, Keramik oder organischen Polymeren oder analogen oder ähnlichen planaren Elementen, die mit chemischen, optischen oder elektrischen Sensoren bestückt sind, verschiedene Biomoleküle, wie Peptide, Proteine, Oligonucleotide oder Nucleinsäuren auf definierten abgegrenzten Flächen sicher und abgegrenzt immobilisiert werden. Dazu werden auf den vorgesehenen Flächen der Substrate oder Sensorelemente seitlich voneinander abgegrenzte Mikrokompartimente erzeugt, die in einer spezifischen Ausführungsvariante die Form von Mikrokapillarreaktoren besitzen können, welche Lösungen z.B. mit unterschiedlichen Molekülen aufnehmen können, ohne daß diese sich miteinander vermischen. Mittels gebräuchlicher chemischer Kopplungsreaktionen, z.B. mit bifunktionellen Reagentien, werden Moleküle aus solchen Lösungen an die Oberflächen der Substrate oder Sensorelemente gebunden, d.h. immobilisiert, die später als Fängermoleküle fungieren können.

Die auf diese Weise herzustellenden Mikrokompartimente (Schritt (b) des Herstellvertahrens) können eine kreisförmige, quadratische oder beliebige andere Geometrie aufweisen. Für ihre Herstellung können polymere, aber auch mineralische oder metallische Werkstoffe als Schicht für das erfindungsgemäße Verfahren benutzt werden. Im Falle von Polymeren kommen beispielsweise Polysiloxane, Polyamide, Polymethacrylate, Polycarbonate oder Polystyrole in Betracht. Diese werden auf die planaren Substrate oder die planaren Sensorelemente aufgebracht, bei denen es sich beispielsweise um einen kompletten Siliziumwafer oder eine Glasplatte oder auch einen einzelnen Chip handeln kann, und ggf. darauf befestigt. Die Haftung der Materialien bzw. Werkstoffe für diese Mikrokompartimente wird entweder durch Eigenhaftung oder durch Heißsiegelverfahren oder durch Laserpunktschweißen oder durch zusätzliche Klebstoffe erreicht. Zumindest im Bereich um die Kompartimente herum sollte sie dabei vorzugsweise dichtend sein. Durch Abstimmung der Eigenschaften von Substrat und Polymer sowie der Befestigungsmethode wird die Möglichkeit der Wiederentfernung erreicht. Dazu werden z.B. Polymere mit entsprechenden Haftungseigenschaften sowie mit ausreichender Resistenz gegen die benutzten Flüssigkeiten ausgewählt.

In einer Ausgestaltung der Erfindung werden Polymerfolien, Polymerfilme oder dünne Polymerplatten für die Schicht verwendet, die vorab mit vorgegebenen Öffnungen versehen und danach so auf dem Substrat oder Sensorelement befestigt werden, daß die vorgesehenen Flächen frei von Polymer bleiben und ein Mikrokompartiment bilden. Bei diesen Flächen handelt es sich vorzugsweise um solche, die Sensoren für die spätere Detektion der Analyten tragen. Die entsprechenden Öffnungen werden bevorzugt durch Stanzprozesse oder auch fotolithographisch oder mit Lochmasken, z.B. in Kombination mit Trockenätzverfahren, hergestellt. Dadurch wird das in Figur 1 a dargestellte Element in einem Prozeß erhalten, der zur Massenproduktion geeignet ist.

Diese Methode hat den Vorteil, daß empfindliche Oberflächen und Sensorelemente wie optische Gitter oder auch Elektroden vom Kontakt mit Fremdstoffen freigehalten werden und man auf diese Weise Kontamination bzw. Verunreinigung der empfindlichen Oberflächen vermeidet.

Mikrokompartimente des Schrittes (b) können alternativ auch durch Aufkleben von dünnen Silizium-, Glas-, Metall- oder Keramikplatten erzeugt werden. Diese Werkstoffe werden vorzugsweise zuvor mit Standardprozessen der Mikrosystemtechnik strukturiert und können durch wiederablösbare Klebstoffe, wie sie etwa bei Etiketten üblich sind, oder auch durch heißsiegelnde Polymere auf den Substraten oder Sensorelementen befestigt werden.

Erfindungsgemäß kann in einer alternativen Ausgestaltung des erfindungsgemäßen Verfahrens ein Polymer oder dessen Vorstufe für die Erzeugung der Mikrokompartimente gemäß Schritt (b) eingesetzt werden, wobei dieses in unstrukturierter Form als Ganzes (als Schicht) auf dem Substrat oder einem Sensorelement wie vorstehend beschrieben in flüssiger oder pastöser Form aufgebracht oder in selbsttragender Form befestigt wird. Diese Polymerschicht kann photochemisch nach bekannten Verfahren strukturiert werden, z.B. indem mittels Fotolack und konventioneller Lithographie oder durch Lochmasken die gewünschten Flächen, vorzugsweise oberhalb der Sensorelemente, freigelegt werden, die später die Mikrokompartimente darstellen sollen. Nachfolgend wird z.B. durch Anwendung von Trockenätzverfahren das Material über den gewünschten Substratoberflächen und ggf. Sensorelementen entfernt, und es entstehen die seitlich begrenzten Mikrokompartimente. Dieses Verfahren ist besonders für die Herstellung von Mikrokompartimentstrukturen geeignet, in denen grabenartige Vertiefungen um die eigentlichen Bioarrays herum bestehen bleiben sollen, da sich diese auf einer vorgefertigten (vorgestanzten und/oder vorgeprägten) Schicht nicht vollständig realisieren lassen: Hier müßten Stege verbleiben, die diese Strukturen halten.

Als Ergebnis beider Verfahren, sowohl mit vorstrukturierten als auch mit auf den Substraten strukturierten Materialien, erhält man dann ein Substrat oder Sensorelement, das Mikrokompartimente in Form von kleinen Töpfchen oder Kammern, ggf. von weiteren Vertiefungen umgeben, aufweist. Wie bereits erwähnt, ist die geometrische Form dieser Strukturen nicht beschränkt, so daß die in den Figuren dargestellten Ausgestaltungen mit runden Öffnungen der Areale nur Beispiele darstellen sollen. Weder sind die Größenverhältnisse der Öffnungen und der Tunnels der Mikrokapillarreaktoren zueinander notwendigerweise vorgegeben, noch die geometrische Form der Strukturen. Der Fachmann wird die jeweils günstige Form anhand der vorgesehenen Fertigungsmethoden festlegen, die wegen der Vielfalt der Fertigungsmöglichkeiten stark voneinander abweichen können. So sind auch eckige (rechteckige, quadratische), ovale oder anders geformte Mikrokompartimente möglich.

Die Durchmesser bzw. Höhen der Kompartimente sind ebenfalls nicht notwendigerweise vorgegeben. Vorteilhafterweise können sie im Bereich zwischen ca. 0,2 µm und mehreren 100 µm liegen. Das Verhältnis von Durchmesser zu Höhe der Kompartimente ist ebenfalls frei wählbar, es kann in geeigneter Weise z.B. im Bereich von 20:1 bis 0,5:1, vorzugsweise von etwa 10:1 bis 1:1 liegen.

Die auf einem der vorgenannten Wege hergestellten Substrate oder Sensorelemente mit seitlich begrenzten Mikrokompartimenten (also Mikrokompartimenten, die mechanisch voneinander abgegrenzt sind), können sodann wie in Figur 1c oder 2b dargestellt mit beliebigen Lösungen befüllt werden. Das zu wählende Volumen der erzeugten Mikrokompartimente wird dabei den Dosiermitteln wie Mikropipetten, Tintenstrahltechnik oder anderen Dosiertechniken sowie den vorgesehenen chemischen Reaktionen bzw. den gegebenen Sensorfunktionen angepaßt. Die Flüssigkeitsvolumina variieren vorzugsweise zwischen ca. 5 - 500 pl bei Piezodosieren und ca. 1nl bis mehrere µl bei Pipettiereinrichtungen. Mit den Dosierflüssigkeiten können sowohl die Reagentien zur Immobilisierung der Fängermoleküle als auch verschiedene Biomoleküle (die z.B. als Fängermoleküle vorgesehen sind) in die verschiedenen Mikrokompartiments appliziert werden.

Die vorgesehenen Oberflächen werden hierfür, insbesondere wenn es sich hierbei um Substratoberflächen handelt, beispielsweise mit kurzkettigen reaktiven bifunktionellen Molekülen aus der Lösung oder aus der Gasphase in Reaktion gebracht. Beispiele für diese Moleküle sind im Prinzip alle Moleküle, die mit dem Substrat reagieren, im Falle von anorganischen Substraten (Silzilium, SiO₂, SiONₓ, Glasvarianten) also Moleküle, die Gruppen wie z.B. Chlor-alkyl- oder -arylsilane, Chloraromaten, Alkox-alkyl- /-arylysilane oder Gemische aus diesen Komponenten tragen und die am anderen Ende des Moleküls, das vorzugsweise als Spacermolekül ausgestaltet ist, über eine zweite reaktive chemische Gruppe wie z.B. Aldehyd, Isocyanat, Cyanat, Thiocyanat, Thiolderivat oder Thioester verfügen. Zur Ankopplung beliebiger organischer Moleküle, vor allem Biomoleküle wie RNA- und DNA-Moleküle, Proteine, Peptide und Oligonucleotide, werden äquivalente Prinzipverfahren benutzt wie zur Ankopplung der hydrophoben Molekülreste beschrieben. Dabei ist auch sowohl die direkte Kopplung als auch die Spacerkopplung über die genannten Silan- und Halogengruppen an die Träger- oder Sensoroberflächen möglich.

Als alternative Immobilisierungsvariante kann die selfassembling-Monoschicht-Bildung angewendet werden. Diese eignet sich insbesondere dann, wenn die Oberfläche von metallischen Sensoren (z.B. von Transducern wie Elektroden oder dgl.) mit den Fängermolekülen belegt werden sollen. So können z.B. Thiolderivate, z.B. 1-Thiol-n-aminoalkane, auf Goldoberflächen von Sensoren bzw. benachbarten Hilfsflächen in der Nähe der Sensoren (Transducern oder dgl.) aufgebracht werden. Eine Besonderheit bei der Ankopplung von Biomolekülen in den zuvor beschriebenen Arraystrukturen ist die Möglichkeit, im Batchverfahren alle Kavitäten gleichzeitig so zu aktivieren, daß nachfolgend unterschiedliche Molekülarten in die einzelnen Kompartimente eingebracht und, wie vorstehend beschrieben, immobilisiert werden.

Dazu kann man wie in Figur 1e dargestellt, Mikrokompartimente oder Mikrokapillarreaktoren selektieren und darin verschiedene chemische Reaktionen ausführen. Nach ausgeführten chemischen Reaktionen, z.B. nach Immobilisierung einer sogenannten Molekül-Bibliothek, kann das Polymer 3 vom Substrat oder dem Sensorelement wieder entfernt werden. Dies kann z.B. mechanisch entsprechend einem Peeling-prozeß, gegebenenfalls auch mit thermischer Unterstützung, erreicht werden. Geeignete Polymere können auch durch Ablösen mit Lösungsmitteln, gegen die die immobilisierten Moleküle resistent sind, entfernt werden. Beispielsweise lassen sich Polymethacrylate, Polycarbonate u.a. mit Lösungsmitteln wie Aceton oder Essigester entfernen, während eine Oligonukleotid-Bibliothek hiervon unbeeinflußt gebunden bleibt. Werden empfindliche Molekülarten wie Proteine, insbesondere Enzyme, Antikörper oder dgl., immobilisiert, ist das reagenzfreie und thermisch nicht belastende mechanische Entfernen der Mikrokompartimente von besonderem Vorteil.

Die Substrate bzw. Sensorelemente weisen nach der Belegung mit unterschiedlichen Molekülspezies und nach Entfernung der Kompartimente eine im wesentlichen ideal planare Oberfläche auf, die den ungehinderten Austausch von Flüssigkeiten, Waschprozesse oder homogene Analysenvorgänge ermöglicht, wobei sowohl die Messung eines Analyten in einer Vielzahl von aufzubringenden Proben als auch die Messung einer Vielzahl von möglichen Analyten (z.B. mit Hilfe einer Bibliothek von Oligonucleotiden, die auf den Arraypositionen angeordnet wurde) in einer einzigen Probe möglich ist.

In einer speziellen Aufführungsvariante wird als polymeres Material für die in Schritt (b) des erfindungsgemäßen Verfahrens einzusetzende Schicht Teflon als Film analog einem Fotolack auf z.B. einen Siliziumwafer aufgeschleudert und nach Standardmethoden auf dem Wafer durch Haftvermittler befestigt. Wie vorstehend beschrieben wird anschließend durch Lochmasken oder Photolithographie das Teflonmaterial von den vorgesehenen Positionen entfernt, und es entstehen Mikrokompartimente entsprechend Figur 1. Die Höhe dieser Mikrokompartimente kann in dieser Ausführungsvariante auf nur 0,5 bis etwa 10µm gesenkt werden. Wählt man ein Verhältnis von Durchmesser der Kompartimente zur Höhe der Polymerschicht von ca. 10 : 1 oder größer, können die Teflonpolymere auf dem Wafer verbleiben, ohne ein wesentliches mechanisches Hindernis für Spülprozesse oder Analytzugang darzustellen. Der Vorteil der Verwendung dieses Teflons besteht in seinem ausgeprägt hydrophoben Verhalten. Dabei wirken schon die geringen Randhöhen der Mikrokompartimente mit den hydrophoben, d.h. wasserabweisenden Beschichtungen der Zwischenräume sehr gut als Trennelemente zwischen den einzelnen Kompartimenten, so daß die verbleibenden Strukturen der Schicht wegen ihrer geringen Höhe keine Nachteile gegenüber einem Detektionssystem aufweisen, in dem diese Schicht vollständig entfernt wurde. In Ausgestaltungen unter Verwendung einer deutlich hydrophoben Schicht sind Detektionssysteme also auch dann geeignet, wenn auf Schritt (e) des erfindungsgemäßen Verfahrens (Ablösen der mikrostrukturierten Schicht) verzichtet wird, sofern die Höhe der strukturierten Schicht so gewählt wird, daß sie Spülprozesse und dgl. nicht behindert.

Eine Teflonschicht kann alternativ auch in selbsttragender Form auf das Substrat aufgebracht werden, die wahlweise vor dem Aufbringen (z.B. durch Stanzen) oder danach strukturiert werden kann.

In einer anderen Ausführungsform der Erfindung, insbesondere bei sehr kleinen Kompartimentvolumina oder bei Dosierung schlecht benetzender Flüssigkeiten, werden wie bereits erwähnt die Mikrokompartimente in Form sogenannter Mikrokapillarreaktoren hergestellt. Diese Kapillarreaktoren bestehen wie in Figur 2a dargestellt aus 2 Mikrokompartimenten 11 und 12 analog wie vorstehend zu Figur 1 beschrieben, die durch einen kapillarartigen Kanal 13 miteinander verbunden sind.

Bei dieser Ausführungfor der Erfindung werden die Öffnungen und die Kanäle vorzugsweise durch Stanzen und Prägen aus (organo)polymerem, mineralischem oder metallischem Material oder gegebenenfalls durch Kombination von Lithographie und Ätzprozessen vorgefertigt und wie im vorstehenden Fall der Einzelkompartimente beschrieben auf dem Substrat oder Sensorelement befestigt. Alternativ werden nur die Kanäle vorgefertigt, z.B. durch Prägen oder Ätzen, und die Ein- und Auslaßöffnungen werden wie vorstehend für die Mikrokompartimente beschrieben, z.B. erst nach Aufbringen auf die Substratoberfläche, erzeugt.

Die Anordnung eines Mikrokapillarreaktors wirkt wie ein System kommunizierender Röhren. Durch die geringen Abmessungen von Kompartiment und Kanal in Dimensionen von 1 µm bis ca. 1 mm, vorzugsweise 50 - 500 µm, wirken Kapillarkräfte beim Befüllen mit Flüssigkeiten.

Wird in eines der Kompartimente, das auch gleichgroß wie oder größer oder kleiner als das andere ausgebildet sein kann, eine Flüssigkeit appliziert, füllt sich durch die Kapillarkraft auch das zweite Kompartiment über den Kanal spontan ohne zusätzliche Hilfsmittel. Ein weiterer Vorteil ist es, daß die applizierte Flüssigkeit vorhandenes Gas in den Mikrokompartimenten und dem Kanal durch die zweite Öffnung verdrängt und damit zuverlässig den Verbleib von Gasbläschen verhindert. Daher können in diese Mikrokapillarreaktoren auch Tropfen dosiert werden, die größer sind als die Öffnung eines der Kompartimente, weil durch die Kapillarkräfte ein solcher Tropfen spontan eingesaugt wird. Die Anordnung des Kapillarreaktors ermöglicht weiterhin auch die direkte Befüllung aus einer auf eine der Kompartimentöffnungen aufgesetzten Kapillare. Nach dem Aufsetzen einer solchen mit Flüssigkeit gefüllten Kapillare saugt sich das System spontan mit Flüssigkeit voll, ohne daß ein Auslaufen beobachtet wird. Neben den besonders einfachen Pipettiermethoden sind auch Piezo- oder andere Tintenstrahldosiertechniken zur Befüllung anwendbar. Das System des Kapillarreaktors kann auch für die Zuführung gleicher Flüssigkeiten oder effiziente Flüssigkeitswechsel, wie sie häufig bei chemischen Reaktionen oder Immobilisierungsverfahren notwendig sind, benutzt werden. Im einfachsten Fall wird ein solcher Waschvorgang durch das Aufsetzen einer Kapillare zum Dosieren an oder auf eine Kompartimentöffnung und dem Absaugen mit einer zweiten Kapillare aus der zweiten Kompartimentöffnung realisiert.

Das Detektionssystem kann in dieser Ausgestaltung der Erfindung entweder gemäß Schritt (e) des erfindungsgemäßen Herstellungsverfahrens von der mikrostrukturierten Schicht befreit werden, nachdem die Fängermoleküle auf die Oberfläche des Substrates aufgebracht wurden. In einer speziellen Ausgestaltung können die Mikrokapillarreaktoren jedoch auch während der Detektion der Analyte auf dem Substrat verbleiben. Dies ist z.B. dann günstig, wenn die Kapillarwirkung der Mikroreaktoren auch für Schritte im Verlauf der Detektion in günstiger Weise genutzt werden kann, z.B. beim Aufbringen einer Vielzahl von Analytflüssigkeiten mit Hilfe von Dosiertechniken wie Stempel- oder Tintenstrahltechniken, oder wenn die Menge der zu messenden Analytflüssigkeit im Mikrokompartiment relativ genau dosierbar sein soll.

In einer weiteren Ausführungsform wird photostrukturierbares Polyimid (oder ein anderes geeignetes, vorzugsweise hydrophobes organisches Polymermaterial) nach Standardprozeduren als Material für Mikrokompartimente und zusätzliche grabenartigen Strukturen verwendet. Wie oben beschrieben werden Mikrokompartimente, die vorzugsweise etwa 50-200 µm hoch sind, photolithographisch oder durch Trockenätzen erzeugt. Zusätzlich werden bei dieser Ausführungsform die Sensorareale von ringförmigen grabenartigen Strukturen umgeben, z.B. in Dimensionen zwischen 10 und 100 µm Breite (siehe Figur 3). Wahlweise können wenige breitere oder viele entsprechend schmale Strukturen angeordnet werden. Der hydrophobe Charakter des Polyimids bewirkt, ebenso wie für die Beschichtung mit Teflon aufgezeigt, eine abweisende Eigenschaft für wäßrige Lösungen. Bei der Dosierung von Tropfen in die Sensorareale wird die Gefahr des Übertretens in eine benachbarte Kavität durch die grabenartigen Strukturen, die flüssiges Material aufnehmen können, entscheidend vermindert. Gegenüber einem flächigen Zwischenraum zwischen den Kompartimenten wirken hier drei trennende Effekte: erstens die hydrophobe Eigenschaft des Polyimids, zweitens das Volumen der grabenartigen Strukturen, die Flüssigkeit aufnehmen können, und drittens die Kanteneigenschaften der Mikrostrukturen, die Tropfen wie an der Kante einer planen Fläche am Abfließen hindern. Da die Winkel der Abrißkanten von hydrophilen Flüssigkeiten auf hydrophoben Unterlagen bekannt oder meßbar sind, kann bei solchen Ausgestaltungen das Volumen der aufgesetzten Flüssigkeitstropfen relativ genau berechnet werden, so daß quantitativ definierbare Mengen an Fängermolekülen auf dem Substrat aufgebracht werden können. Z.B. aus diesem Grund kann es auch in dieser Ausgestaltung der Erfindung gegebenenfalls vorteilhaft sein, das Detektionssystem nicht von der mikrostrukturierten Schicht gemäß Schritt (e) des erfindungsgemäßen Verfahrens zu befreien, sondern den oder die Analyte in den seitlich von den grabenartigen Strukturen umgebenen, abgegrenzten Mikrokompartimenten zu detektieren. Dies sollte jedoch nicht die Regel sein, vor allem, wenn auf dem Substrat vorhandene Strukturen notwendige, über den gesamten Chip oder Wafer zu erfolgende Waschprozesse oder dgl. behindern.

Zum Dosieren und auch Absaugen der verwendeten Lösungen werden Kapillaren derart ausgezogen, daß der Außendurchmesser an ihrer Spitze an die Mikrostrukturen auf dem Detektionssystem angepaßt sind, z.B. ca. 2 - 10 µm beträgt. Die Kapillarenspitzen sind damit im Verhältnis zu den einzelnen Arraypositionen relativ klein. Die mit diesen Kapillaren getrennt abgebbaren Volumina sind im unteren nl-Bereich damit in Relation zum Gesamtvolumen in einem Mikrokompartiment oder in einem Mikrokapillarreaktor ebenfalls sehr klein, da sie ca. 5-10 % dieses Gesamtvolumens betragen. Alternativ werden mit Piezo-Dosierköpfen pl-Mengen der entsprechenden Lösungen berührungslos in Mikrokompartimente oder in einen Mikrokapillarreaktor eingebracht. Hierbei ist die Dimension des auftreffenden pl-Tropfenstrahls in Relation zur Dimension des Arrayposition noch geringer.

Für das Dosieren verschiedener Lösungsmittel mit den Glaskapillaren kann die Polarität der Außenseite der Glaskapillaren durch chemische Modifikation im Gegensinn zur Polarität des jeweils verwendeten Lösungsmittels eingestellt werden. So können nach Hydrophobisierung der Außenseite der Kapillaren mit Chlorsilan wäßrige Lösungen definiert und verlustfrei dosiert werden, da eine retrograde Wanderung von aus der Kapillarenspitze ausgetretenen Tropfen nicht mehr erfolgt. Für die Dosierung organischer Lösungsmittel wird die umgekehrte Lösung verwendet. Mit hydrophiler Außenseite der Kapillarenspitze ist retrogrades Wandern der ausgetretenen Tropfen nicht mehr möglich.

Die Verdunstung von wäßrigen Lösungen kann im Falle planarer Strukturen und Mikrokompartimente wirksam durch Lagerung unter gesättigter Wasserdampfatmosphäre verhindert werden. Es besteht zudem die Möglichkeit, Volumenverluste durch Verdunstung mittels aufgelegter oder aufgeklebter Folien zu verhindern. Ohne diese Maßnahme erfolgt bei planaren Strukturen innerhalb 0,5 min und bei Mikrokompartimenten innerhalb weniger Minuten das Abtrocknen der aufgebrachten Flüssigkeit.

Das Füllen und Absaugen kann ebenso durch das Aufsetzen eines zur Struktur in Figur 3 gezeigt komplementären Stempels 20 vorgenommen werden. Durch den Stempel werden wie in Figur 4 dargestellt mehrere oder alle Einlaßöffnungen 11 der Mikrokapillarreaktoren durch einen Verteilerkanal 18 im Stempel 20 miteinander verbunden. In gleicher Weise werden die verschiedenen Ausflußöffnungen 12 der Kapillarreaktoren im Array durch die Verteilerkanäle 19 miteinander verbunden. Dies kann reihenweise oder für das gesamte Array realisiert werden, so daß mit Einlaß- und Auslaßöffnung 16 bzw. 17 das gesamte Mikrokapillarreaktorarray unter Druck gespült oder beschickt werden kann. Dazu wird Flüssigkeit mit Schläuchen aus entsprechenden Reservoirs oder Befüllungsapparaturen in die Einlaßöffnung 16 zugeführt und durch die Auslaßöffnungen 17 im Stempel durch das zweite Kanalsystem wieder abgeführt. Solche Stempel können bevorzugt aus dichtenden Polymeren oder gummiartigen Materialien wie z.B. Silikonen, Polyamiden oder Polykohlenwasserstoffen hergestellt werden. Es sind aber auch Metall- oder Siliziumstempel mit dünnen elastischen Dichtungen geeignet. Im Falle von Glas- oder Siliziummaterialien können besonders vorteilhaft die üblichen Ätzverfahren zum Herstellen von Mikrostrukturen verwendet werden.

Nach Reaktionen in den Arrays und/oder Immobilisation von Molekülen auf den Bodenflächen der Kompartimente, die sich auf den Substraten oder Sensorelementen befinden, kann ebenso wie für die eeinfachen" Mikrokompartimentarrays beschrieben die Materialschicht, die den Mikrokapillarreaktor bildet, entfernt werden. Erfindungsgemäß wird auf diese Weise ein planares Molekülarray ohne mechanische Hindernisse zwischen Einzelpositionen erzeugt.

Nachstehend soll die Erfindung anhand von Ausführungsbeispielen näher erläutert werden.

### Beispiel 1:

### Herstellung eines elektrischen Sensorarrays

Mikroelektrodenstrukturen entsprechend **Figur 1** werden in Standard-Siliziumtechnologie hergestellt. [K. Reimer et al. Sensors and Actuators, A 46/47 (1995) 66]. Dazu wird 500 nm dickes thermisches Oxid auf 4"-Siliziumwafern erzeugt. Auf dem Oxid wird Lack photolithografisch so strukturiert, daß die Konturen der Elektroden für die Elektrodenstrukturen freiliegen. Das Elektrodensystem gemäß Details in **Figur 1a** besteht aus kammartigen Elektrodenbändern mit 1,5 µm Breite im Abstand von 800 nm. Die Elektrodenbänder sind über Leiterbahnen (nicht sichtbar) unter der Isolierung 3 mit den Kontakflächen 10 verbunden. Es sind 12 Sensorarraypositionen in einer 4x4 Matrix mit Arraypositionen von 300 µm Durchmesser auf dem Sensorarray angeordnet. Die Abstände der Sensorarraypositionen betragen 400 µm, so daß ein aktives Sensorarraygebiet von ca. 2,5 mm x 2,5 mm entsteht.

Der mit Siliziumdioxid beschichtete Wafer wird mit einer photolithographischen Maske mit den Strukturen der Elektroden versehen. Eine 20 nm dicke Titanhaftschicht und eine 150 nm dicke Goldschicht werden auf die gesamte Oberfläche mittels Elektronenstrahl aufgedampft. Durch einen Lift off-Prozeß wird alles Material zwischen den Elektroden, Leiterbahnen und Kontakten beseitigt. Der Wafer wird anschließend mit einer 400 nm dicken Silizium-Oxinitrid-Schicht bedeckt, die im Plasma durch chemische Abscheidung (PECVD-SiNₓ:H) erzeugt wird. Im folgenden werden die Arraypositionen und die außenliegenden Kontaktflächen durch reaktives chemisches Trockenätzen bis auf die Goldflächen freigelegt. Nach Aufschleudern eines Schutzlackes wird der Wafer von der Rückseite entsprechend der vorgesehenen Einzelchipkanten ca. 250 µm tief von der Rückseite eingesägt.

### Beispiel 2:

### Aufbau von Mikrokompartimenten mit vorgefertigten Polymeren durch Heißsiegeln

Elektrische Sensorarrays, die nach Beispiel 1 hergestellt worden sind, werden mit Aceton im Ultraschallbad von Schutzlack befreit und mehrmals mit Alkohol und Reinstwasser gewaschen. Im folgenden Schritt werden sie im Waferverbund durch das Auflaminieren einer vorher perforierten 400 µm dicken Polypropylen-Folie mit Mikrokompartimenten belegt. Die Perforation entspricht dabei den Größen der Sensorarraypositionen und der Kontaktflächen. Das Auflaminieren geschieht mittels Erwärmung durch einen Stempel. Es werden ca. 200 µm breite Streifen um die Arraypositionen herum versiegelt. Die Justage der mittels eines Vakuumstempels in Wafergröße aufgebrachten Folie wird mittels Justiermarken auf der Waferoberfläche durch optische Kontrolle vorgenommen. Der auf -20°C gekühlte Wafer wird entlang der gemäß Beispiel 1 vorgesägten Chipkanten gebrochen, so daß die einzelnen Chips erhalten werden.

### Beispiel 3:

### Aufbau von Mikrokompartimenten mit vorgefertigten Polymeren durch Laminieren

Optische Sensorarrays, die aus Glaswafem bestehen, die homogen mit einer lichtleitenden Schicht aus Siliziumoxinitrid sowie einer Siliziumdioxidschicht von ca. 20 nm versehen sind, werden gemäß Beispiel 1 von der Rückseite angesägt.

Anschließend werden sie mit Aceton im Ultraschallbad von Schutzlack befreit und mehrmals mit Alkohol und Reinstwasser gewaschen.

Im folgenden Schritt wird ganzflächig eine 0,3 mm Polypropylenfolie mittels rückstandsfrei ablösbaren Klebers befestigt. Nach dem Auflegen einer 0,6 mm starken Lochmaske aus geätztem Silizium wird mit einer Lochanordnung, die den gewünschten Arraypositionen und Mikrokompartimenten entspricht, mittels reaktivem Trockenätzen das polymere Material entsprechend den Arraypositionen bis zur Siliziumdioxidschicht weggeätzt. Dazu benutzt man reaktives Plasma. Der auf -20°C gekühlte Wafer wird entlang der gemäß Beispiel 1 vorgesägten Chipkanten gebrochen, so daß die einzelnen Chips erhalten werden.

### Beispiel 4:

### Aufbau von Mikrokapillarreaktoren

Elektrische Sensorarrays, die nach Beispiel 1 hergestellt worden sind, werden mit Aceton im Ultraschallbad von Schutzlack befreit und mehrmals mit Alkohol und Reinstwasser gewaschen. Im folgenden Schritt werden sie durch Kleben analog Beispiel 3 mit einer vorher perforierten 0,5 mm dicken Polyamid-Scheibe im Waferformat versehen. Zur Erzeugung der Mikrokapillarreaktoren werden vorher in die Polymerscheibe die 100 µm langen Verbindungskanäle eingeprägt. Die Ein- und Auslaßöffnungen werden wie die Mikrokompartimente in Beispiel 3 hergestellt. Die Einlaßöffnungen haben 200 µm und die Auslaßöffnungen 300 µm Durchmesser. Der auf -20°C gekühlte Wafer wird entlang der gemäß Beispiel 1 vorgesägten Chipkanten gebrochen, so daß die einzelnen Chips erhalten werden.

### Beispiel 5:

### Aufbau von Mikrokompartimenten mit photolithographisch strukturierten Polymeren

Elektrische Sensorarrays im Waferverbund nach Beispiel 1 werden mit Aceton im Ultraschallbad von Schutzlack befreit und mehrmals mit Alkohol und Reinstwasser gewaschen. Anschließend werden sie im Spin Coat-Verfahren mit Teflon AF (DuPont) mit einem 15 µm dicken Film beschichtet. Zuvor wird der gesamte Wafer mit dem zugehörigen Haftmittel (DuPont) benetzt. Nach Ausbacken der Teflonschicht bei 150°C für 20 min wird eine photolithographische Maske mit den Strukturen der Arraypositionen sowie der grabenartigen Vertiefungen gemäß 15 in **Figur 3a** und der Kontaktflächen aufgebracht. Das Teflon wird mittels reaktivem Trockenätzen von den Gebieten der Arraypositionen und der Kontaktflächen sowie der grabenartigen Strukturen bis zu den Oberflächen der Elektroden bzw. der Substratoberfläche freigelegt.

Alternativ zu Teflon AF kann die Polymerschicht auch aus Standard-Polyimid hergestellt und identisch strukturiert werden. Der Wafer wird entlang der gemäß Beispiel 1 vorgesägten Chipkanten gebrochen, so daß die einzelnen Chips erhalten werden.

### Beispiel 6:

### Immobilisierung von Oligonukleotiden auf Sensorarrays

Ein nach Beispiel 3 hergestellter Chip wird auf einen Keramikträger mit üblichen Leiterbahnen montiert und drahtgebondet. Durch Aufkleben eines polymeren Formteils aus Polysiloxan entlang der Chipkanten, das die aktiven Elektrodengebiete eingrenzt, wird ein Reaktionsgefäß von ca. 5 mm Durchmesser auf dem Chip befestigt. In dieses Reaktionsgefäß wird eine 5mM Lösung von 11-Mercapto-undecanylamin in Cyclohexanon eingefüllt und abgedeckt und bei Raumtemperatur für 5 Std. belassen. Die Belegung der Elektroden durch Self-Assembling wird kontrolliert durch eine Online-Impedanz-Messung (EG&G Model 398).

Diese Belegung der Metalloberflächen kann alternativ auch vor dem Brechen und Vereinzeln der Chips durch Tauchen des gesamten vorher entlackten Wafers in die analogen Lösungen vorgenommen werden.

Die nun mit Aminofunktionen derivatisierte Oberfläche des Chips wird anschließend mit einem Tropfen (0,1-10 µl) 20 mM Tolylen-2,4-düsocyanat (TDI) in Essigsäureethylester (EEE) bei Raumtemperatur während 10-60 min inkubiert. Es wird mit EEE gewaschen und getrocknet.

Nach Waschen eines so aktivierten Chips mit neutraler Phosphatpufferlösung werden mittels Mikrokapillardosierung nacheinander in jede Sensorarrayposition je 5 nl 24mer-Oligonukleotid eingebracht, das am 5'-Terminus eine Jodoacetyl-Gruppe trägt.

Die Nucleotidsequenz ist an jeder Arrayposition unterschiedlich entsprechend der zu analysierenden verschiedenen Ziel-DNA-Moleküle. Dabei entsprechen die Reaktionsflüssigkeiten den Volumina der Mikrokompartimente. Die Kopplungsreaktion erfolgt spontan während einer Stunde bei Zimmertemperatur. Nach erfolgter kovalenter Anbindung wird das elektrische Sensorarray mit SSPE-Puffer (0,9M NaCl, 50mM NaH₂PO₄, 5mM Na₂EDTA, pH 7,5) gewaschen.

Die vorstehend genannten strukturierten Polymerbeschichtungen werden durch mechanisches Peeling von den Chips entfernt.

### Beispiel 7:

### Immobilisierung von Antigen-Proteinen auf Sensorarrays

Ein nach Beispiel 5 hergestellter Chip wird auf einen Keramikträger mit üblichen Leiterbahnen montiert und drahtgebondet.

Durch Aufkleben eines polymeren Formteils aus Polysiloxan entlang der Chipkanten, das die aktiven Elektrodengebiete eingrenzt, wird ein Reaktionsgefäß von ca. 5mm Durchmesser auf dem Chip befestigt. Die in diesem Ring liegenden Flächen werden mit Alkohol und destilliertem Wasser gewaschen.

Direkt danach erfolgt eine Silanisierung der Oberflächen in den Arraypositionen durch Inkubation in Toluol unter Zugabe eines Silans (z.B. Aminopropyltriethoxysilan; Isocyanatopropyltriethoxysilan; Glycidoxypropyltrimethoxysilan) ad 1-5 % (v/v) bei 40-80°C während 1-30 h. Nach mehrfachem Waschen in Toluol wird im Trockenofen während 0,5-2 h bei 60-80°C getempert. Die derartig mit sekundären chemischen Funktionen derivatisierten Oberflächen werden anschließend direkt mit einem Tropfen (0,1-10 µl) 20 mM Tolylen-2,4-diisocyanat (TDI) in Essigsäureethylester (EEE) bei RT während 10-60 min inkubiert. Nach Waschen mit EEE wurde nach Trocknen in jedes Nfikrokornpartiment ein Tropfen (0,1-10µl) einer anderen Antigen-Proteinlösung (C_{Protein} ca. 1-10 mg/ml in Carbonatpuffer oder Phosphatpuffer pH 9,5) aufgegeben und bei RT während 0,1 - 2 h inkubiert.

Die vorstehend genannten strukturierten Polymerbeschichtungen werden durch mechanisches Peeling von den Chips entfernt.

### Beispiel 8:

### Anwendung eines Stempels zur Affinitätsbindung von DNA auf Sensorarrays

Elektrische Sensorarrays werden nach Beispiel 1 hergestellt, wobei die Aktuatoren als interdigitale Elektroden gestaltet sind [M. Paeschke et al., Analytica Chimica Acta 305 (1995) 126]. Nach Beispiel 4 werden sie mit Mikrokapillarreaktoren versehen und nach Beispiel 6 mit verschiedenen Oligonucletiden belegt.

Ein Stempel entsprechend Figur 4 wird unter mechanischem Druck auf dem Array befestigt. Anschließend wird DNA-Analyt als Gemisch durch den Stempeleingang 16 in die Mikrokapillarreaktoren eingefüllt. Es wird Analyt-DNA verwendet, in welche bei der konventionellen Vervielfältigung der DNA mittels PCR biotinylierte Primer Biotin-Reste eingeführt wurden. Die Analyt-DNA in SSPE-Puffer wird mit Denhardt's Lösung (0,5 g Ficoll, 0,5 g Polyvinylpyrrolidon, 0,5 g RSA in 0.5 I H₂O) in eine Konzentration von 1 µg/ml überführt und auf das Sensorarray aufgegeben und bei Raumtemperatur 2 Std inkubiert. Zur Entfernung überschüssiger Analyt-DNA wird bei 40°C mit SSC-Puffer (52,6 g NaCl, 26,5 g Na-Citrat in 0,8 I H₂O) gewaschen, indem die Spülflüssigkeit unter Druck durch Stempel und Reaktoren gespült und an den Ausgangsöffnungen 17 entnommen wird.

Die Detektion gebundener DNA erfolgt nach Markierung mit Streptavidin/alkalische Phosphatase-Konjugaten und erneutem Waschen durch elektrochemisches Redox-Recycling [Hintsche et al. in Frontiers in Biosensorics/Fundamental Aspects, eds. F.W. Scheller et al., Birkhäuser Verlag Basel/Switzerland 1997, p 278] an jeder Arrayposition.

Die Erfindung ist also unter anderem auf ein Verfahren zu Herstellung eines molekularen Arrays gerichtet, auf dem Moleküle mittels Mikrokompartimenten oder Mikrokapillarreaktoren auf planaren Substraten oder Seonsorelementen immobilisiert werden, wobei molekulare Arrays mit planaren Oberflächen erzeugt werden. Mit dem Verfahren können temporäre Mikrokompartimente in zusätzlich aufgebrachten Schichten und Öffnungen mit Zugang zur Oberfläche auf planaren Substraten oder Sensorelementen erzeugt werden. Diese temporären Mikrokompartimente können durch zusätzlich aufgebrachte perforierte Schichten mit Öffnungen und Zugang zur Oberfläche auf den planaren Substraten oder Sensorelementen erzeugt werden. Dabei können jeweils zwei Mikrokompartimente durch einen Kanal miteinander zu einem Mikrokapillarreaktor verbunden werden, wobei dessen Boden von der Oberfläche der planaren Substrate oder Sensorelemente gebildet wird. Die Mikrokompartimente oder die Mikrokapillarreaktoren können wie auch die planaren Substrate oder Sensorelemente aus (unterschiedlichen, ggf. aber auch gleichen) polymeren oder metallischen oder mineralischen Materialien bestehen. Bei den Sensorelementen kann es sich um vielfach angeordnete optische oder elektrische Transducer handeln. Zur Ausbildung der Mikrokompartimente oder Mikrokapillarreaktoren werden die Materialien vorzugsweise wiederablösbar mit dem Substrat verbunden. Sie können (z.B. in Form von (selbsttragenden) Schichten) vorab perforiert oder geprägt werden, wobei Strukturen entstehen, die den Mikrokompartimenten oder Mikrokapillarreaktoren entsprechen, oder sie können durch zusätzliche Schritte aus vorgefertigten Teilstrukturen in diese umgeformt werden. Die Mikrokapillarreaktoren und/oder Mikrokompartimente können durch photolithographische Prozesse in Kombination mit Naßätzverfahren oder reaktives Trockenätzen an den gewünschten Stellen durch Schaffung der entsprechenden Volumina der Mikrokompartimente oder Mikrokapillarreaktoren erzeugt werden. Deren Fläche, die vom Substrat oder Sensorelementen gebildet wird, sollte für chemische Reaktoren frei zugänglich sein, so daß darauf Fängermoleküle angeordnet werden können. Die Materialien der Mikrokompartimente können anschließend physikalisch oder chemisch wieder entfernt werden. Ein den Maßen der Mikrokapillarreaktoren angepaßter Stempel, der mit fluidischen Kanälen ausgerüstet ist, kann auf diese aufgesetzt werden, wobei die Reaktoren paarweise, reihenweise oder im gesamten mit Flüssigkeit versehen werden können.

Die erfindungsgemäß herstellbaren Arrays können zur Affinitätsbindung von DNA verwendet werden.

## Patentansprüche

1. Verfahren zum Herstellen eines Detektionssystems zur Detektion unterschiedlicher Analyte in einer Probe oder zur Detektion eines Analyten in einer Vielzahl von Proben, mit einer ebenen oder im wesentlichen ebenen Substratoberfläche und auf dieser Oberfläche angeordneten Arrays von Analyt bindenden Fängermolekülen, **gekennzeichnet durch** die folgenden Schritte:
(a) Bereitstellen eines planaren oder im wesentlichen planaren Substrats mit mehr als einem Sensor zur chemischen, optischen oder elektrischen Detektion der Analyte, die auf oder in der Oberfläche des Substrates angeordnet sind,
(b) Aufbringen einer Schicht auf das Substrat, die entweder bereits mikrostrukturiert ist, oder Aufbringen einer durchgehenden Schicht auf das Substrat und Mikrostrukturieren der Schicht, jeweils derart, daß voneinander getrennte Bereiche des Substrats, auf oder in deren Oberfläche Sensoren angeordnet sind, nicht von der Schicht bedeckt sind, wobei Schicht und Substrat zumindest um die unbedeckten Bereiche herum dichtend miteinander verbunden sind,
(c) In-Kontakt-Bringen zumindest eines Teils der unbedeckten Bereiche mit mindestens einer Fängermoleküle enthaltenden Flüssigkeit, derart, daß die Fängermoleküle in der Lage sind, an der Substratoberfläche und/oder auf der Oberfläche der Sensoren zu haften oder daran zu binden,
(d) Entfernen der nicht haftenden Bestandteile der Flüssigkeit.
(e) Entfernen der mikrostrukturierten Schicht oder von Teilen dieser Schicht.

2. Verfahren nach Anspruch 1, **dadurch gekennzeichnet, daß** im Schritt (b) die voneinander getrennten Bereiche des Substrats, die nicht von der Schicht bedeckt sind, die Form von Mikrokapillarreaktoren erhalten, die durch zwei Öffnungen in der Schicht und eine Verbindung zwischen diesen Öffnungen gebildet werden, wobei diese Verbindung in Kontakt mit der Substratoberfläche steht.

3. Verfahren nach einem Ansprüche 1 oder 2, **dadurch gekennzeichnet, daß** die einzelnen in Schritt (b) erhaltenen, voneinander getrennten Bereiche des Substrats, die nicht von der Schicht bedeckt sind, von einem oder mehreren Stegen umgeben sind, deren Durchmesser von 1/20 bis 1/1 , vorzugsweise 1/10 bis 1/3 des Durchmessers der voneinander getrennten, nicht bedeckten Bereiche beträgt, wobei dieser Steg oder diese Stege von jeweils einer grabenartigen Vertiefung umgeben ist/sind, die sich um den Steg herum erstreckt/erstrecken, und einen Durchmesser im Bereich von 1/20 bis 1/1, vorzugsweise 1/10 bis 1/3 des Durchmessers der genannten, nicht bedeckten Bereiche aufweist/aufweisen.

4. Verfahren nach einem der voranstehenden Ansprüche, **dadurch gekennzeichnet, daß** in Schritt (b) ein organisches oder teilweise organisches Polymer oder dessen Vorstufen auf das Substrat aufgebracht und mittels lithographischer Verfahren und/oder Ätzverfahren strukturiert wird.

5. Verfahren nach einem der Ansprüche 1 bis 3, **dadurch gekennzeichnet, daß** in Schritt (b) eine Schicht aus einem selbsttragenden Polymeren, vorzugsweise eine Polymerfolie, ein Polymerfilm oder eine dünne Polymerplatte, auf dem Substrat befestigt wird, die entweder bereits zuvor oder auf dem Substrat mikrostrukturiert wurde/wird.

6. Verfahren nach einem der Ansprüche 1 bis 3, **dadurch gekennzeichnet, daß** in Schritt (b) eine Schicht aus einem anorganischen Material, beispielsweise eine Silizium-, Glas-, Metall- oder Keramikplatte, die zuvor mikrostrukturiert, beispielsweise gestanzt oder photolithographisch strukturiert worden war, auf dem Substrat befestigt wird.

7. Verfahren nach Anspruch 5 oder 6, **dadurch gekennzeichnet, daß** die Befestigung mit Hilfe eines wieder ablösbaren Klebstoffes oder durch Heißsiegeln mit Polymeren oder durch Laserschweißen erfolgt.

8. Verfahren nach einem der Ansprüche 5 bis 7, **dadurch gekennzeichnet, daß** die Schicht vor dem Befestigen auf dem Substrat zusätzlich mit Prägungen versehen wurde.

9. Verfahren nach einem der voranstehenden Ansprüche, **dadurch gekennzeichnet, daß** die strukturierte Schicht in Schritt (e) mechanisch oder chemisch, z.B. durch Lösungsmittel, abgelöst wird.

10. Detektionssystem zur Detektion unterschiedlicher Analyte in einer Probe oder zur Detektion eines Analyten in einer Vielzahl von Proben, mit einer ebenen oder im wesentlichen ebenen Substratoberfläche und auf dieser Ebene angeordneten Arrays, die für Analyt bindende Fängermolekülen vorgesehen sind, mit den folgenden Komponenten:
(a) einem planaren Substrat mit Sensoren zur chemischen, optischen oder elektrischen Detektion, die auf oder in der Oberfläche des Substrats angeordnet sind,
(b) einer auf diesem Substrat befindlichen Schicht, die derart mikrostrukturiert ist, daß voneinander getrennte Bereiche des Substrats, auf oder in deren Oberfläche die Sensoren angeordnet sind, nicht von der Schicht bedeckt sind, wobei Schicht und Substrat zumindest um die unbedeckten Bereiche herum dichtend miteinander verbunden sind,
**dadurch gekennzeichnet, daß** entweder
(i) die auf dem Substrat aufgebrachte Schicht aus einem hydrophoben Material besteht und eine Dicke von nicht mehr als 20 µm, vorzugsweise von nicht mehr als 10 µm, besonders bevorzugt nicht mehr als 1 µm besitzt, oder
(ii) die voneinander getrennten Bereiche des Substrats, die nicht von der Schicht bedeckt sind, die Form von Mikrokapillarreaktoren besitzen, die durch zwei Öffnungen in der Schicht und eine Verbindung zwischen diesen Öffnungen gebildet werden, wobei diese Verbindung in Kontakt mit der Substratoberfläche steht, oder
(iii) die einzelnen voneinander getrennten Bereiche des Substrats, die nicht von der Schicht bedeckt sind, von einem oder mehreren Stegen umgeben sind, deren Durchmesser vorzugsweise von 1/20 bis 1/1, stärker bevorzugt 1/10 bis 1/3 des Durchmessers der voneinander getrennten, nicht bedeckten Bereiche beträgt, wobei dieser Steg oder diese Stege von jeweils einer grabenartigen Vertiefung umgeben ist/sind, die sich um den Steg herum erstreckt/erstrecken und einen Durchmesser im Bereich von vorzugsweise 1/20 bis 1/1, stärker bevorzugt von 1/10 bis 1/3 des Durchmessers der genannten, nicht bedeckten Bereiche aufweist/aufweisen,
wobei die Ausgestaltung (i) auch in Kombination mit der Ausgestaltung (ii) oder der Ausgestaltung (iii) realisiert sein kann.

11. Detektionssystem zur Detektion unterschiedlicher Analyte in einer Probe oder zur Detektion eines Analyten in einer Vielzahl von Proben, mit einer ebenen oder im wesentlichen ebenen Substratoberfläche und auf dieser Ebene angeordneten Arrays von Analyt bindenden Fängermolekülen, mit den folgenden Komponenten:
(a) einem planaren Substrat mit Sensoren zur chemischen, optischen oder elektrischen Detektion, die auf oder in der Oberfläche des Substrats angeordnet sind,
(b) einer auf diesem Substrat befindlichen Schicht, die derart mikrostrukturiert ist, daß voneinander getrennte Bereiche des Substrats, auf oder in deren Oberfläche die Sensoren angeordnet sind, nicht von der Schicht bedeckt sind, wobei Schicht und Substrat zumindest um die unbedeckten Bereiche herum dichtend miteinander verbunden sind, sowie
(c) Analyt bindenden Fängermolekülen, die sich auf der Oberfläche von Bereichen des Substrats, die nicht von der Schicht bedeckt sind, und/oder auf der Oberfläche von Sensoren befinden.
**dadurch gekennzeichnet, daß** entweder
(i) die auf dem Substrat aufgebrachte Schicht aus einem hydrophoben Material besteht und eine Dicke von nicht mehr als 20 µm, vorzugsweise von nicht mehr als 10 µm, besonders bevorzugt nicht mehr als 1 µm besitzt, oder
(ii) die voneinander getrennten Bereiche des Substrats, die nicht von der Schicht bedeckt sind, die Form von Mikrokapillarreaktoren besitzen, die durch zwei Öffnungen in der Schicht und eine Verbindung zwischen diesen Öffnungen gebildet werden, wobei diese Verbindung in Kontakt mit der Substratoberfläche steht, oder
(iii) die einzelnen voneinander getrennten Bereiche des Substrats, die nicht von der Schicht bedeckt sind, von einem oder mehreren Stegen umgeben sind, deren Durchmesser vorzugsweise von 1/20 bis 1/1, stärker bevorzugt 1/10 bis 1/3 des Durchmessers der voneinander getrennten, nicht bedeckten Bereiche beträgt, wobei dieser Steg oder diese Stege von jeweils einer grabenartigen Vertiefung umgeben ist/sind, die sich um den Steg herum erstreckt/erstrecken und einen Durchmesser im Bereich von vorzugsweise 1/20 bis 1/1, stärker bevorzugt von 1/10 bis 1/3 des Durchmessers der genannten, nicht bedeckten Bereiche aufweist/aufweisen,
wobei die Ausgestaltung (i) auch in Kombination mit der Ausgestaltung (ii) oder der Ausgestaltung (iii) realisiert sein kann.

12. Verfahren zum Herstellen eines Detektionssystems zur Detektion unterschiedlicher Analyte in einer Probe oder zur Detektion eines Analyten in einer Vielzahl von Proben, mit einer ebenen oder im wesentlichen ebenen Substratoberfläche und auf dieser Oberfläche angeordneten Arrays von Analyt bindenden Fängermolekülen, **gekennzeichnet durch** die folgenden Schritte:
(a) Bereitstellen eines planaren oder im wesentlichen planaren Substrats mit Sensoren zur chemischen, optischen oder elektrischen Detektion der Analyte, die auf oder in der Oberfläche des Substrates angeordnet sind,
(b) Aufbringen einer Schicht auf das Substrat, die entweder bereits mikrostrukturiert ist, oder Aufbringen einer durchgehenden Schicht auf das Substrat und Mikrostnrkturieren der Schicht, jeweils derart, daß voneinander getrennte Bereiche des Substrats, auf oder in deren Oberfläche die Sensoren angeordnet sind, nicht von der Schicht bedeckt sind, wobei Schicht und Substrat zumindest um die unbedeckten Bereiche herum dichtend miteinander verbunden sind,
(c) In-Kontakt-Bringen zumindest eines Teils der unbedeckten Bereiche mit mindestens einer Fängermoleküle enthaltenden Flüssigkeit, derart, daß die Fängermoleküle in der Lage sind, an der Substratoberfläche und/oder auf der Oberfläche der Sensoren zu haften oder daran zu binden,
(d) Entfernen der nicht haftenden Bestandteile der Flüssigkeit.

## Claims

1. Process for producing a detection system for the detection of different analytes in a sample or for the detection of one analyte in a plurality of samples, having a flat or essentially flat substrate surface and arrays of analyte-binding receptor molecules arranged on this surface, **characterised by** the following steps:
(a) provision of a planar or essentially planar substrate having more than one sensor for the chemical, optical or electrical detection of the analytes which are arranged on or in the surface of the substrate,
(b) application of a layer to the substrate, which is either already microstructured, or application of a continuous layer to the substrate and microstructuring of the layer, in each case such that regions of the substrate separated from one another, on or in the surface of which sensors are arranged, are not covered by the layer, wherein layer and substrate are joined to one another at least around the non-covered regions in sealing manner,
(c) contacting at least some of the non-covered regions with at least one liquid containing receptor molecules, such that the receptor molecules are able to adhere to the substrate surface and/or to the surface of the sensors or to bind thereto,
(d) removal of the non-adhering constituents of the liquid,
(e) removal of the microstructured layer or of parts of this layer.

2. Process according to claim 1, **characterised in that** in step (b), the regions of the substrate separated from one another, which are not covered by the layer, obtain the form of microcapillary reactors, which are formed by two openings in the layer and a connection between these openings, wherein this connection is in contact with the substrate surface.

3. Process according to one of claims 1 or 2, **characterised in that** the individual regions of the substrate separated from one another and obtained in step (b), and which are not covered by the layer, are surrounded by one or more bars, the diameter of which is from 1/20 to 1/1, preferably 1/10 to 1/3 of the diameter of the non-covered regions separated from one another, wherein this bar or these bars is/are surrounded by in each case a trough-like depression, which extends/extend around the bar, and has/have a diameter in the range from 1/20 to 1/1, preferably 1/10 to 1/3 of the diameter of the said non-covered regions.

4. Process according to one of the preceding claims, **characterised in that** in step (b), an organic or partly organic polymer or its precursors is applied to the substrate and structured by means of lithographic processes and/or etching processes.

5. Process according to one of claims 1 to 3, **characterised in that** in step (b), a layer of a self-supporting polymer, preferably a polymer sheet, a polymer film or a thin polymer plate, is attached to the substrate, which has either already been microstructured beforehand or is microstructured on the substrate.

6. Process according to one of claims 1 to 3, **characterised in that** in step (b), a layer of an inorganic material, for example a silicon, glass, metal or ceramic plate, which had been microstructured beforehand, for example punched or photolithographically structured, is attached to the substrate.

7. Process according to claim 5 or 6, **characterised in that** attachment is effected with the aid of a re-releasable adhesive or by hot-sealing using polymers or by laser welding.

8. Process according to one of claims 5 to 7, **characterised in that** the layer was additionally provided with embossing before attachment to the substrate.

9. Process according to one of the preceding claims, **characterised in that** the structured layer is released in step (e) mechanically or chemically, for example by solvent.

10. Detection system for the detection of different analytes in a sample or for the detection of one analyte in a plurality of samples, having a flat or essentially flat substrate surface and arrays arranged on this plane which are provided for analyte-binding receptor molecules, having the following components:
(a) a planar substrate having sensors for chemical, optical or electrical detection which are arranged on or in the surface of the substrate,
(b) a layer situated on this substrate, which is microstructured such that regions of the substrate separated from one another, on or in the surface of which the sensors are arranged, are not covered by the layer,
wherein layer and substrate are joined to one another at least around the non-covered regions in sealing manner,
**characterised in that** either
(i) the layer applied to the substrate consists of a hydrophobic material and has a thickness of not more than 20 µm, preferably of not more than 10 µm, particularly preferably not more than 1 µm, or
(ii) the regions of the substrate separated from one another, which are not covered by the layer, have the form of microcapillary reactors, which are formed by two openings in the layer and a connection between these openings, wherein this connection is in contact with the substrate surface, or
(iii) the individual regions of the substrate separated from one another, which are not covered by the layer, are surrounded by one or more bars, the diameter of which is preferably from 1/20 to 1/1, more preferably 1/10 to 1/3 of the diameter of the non-covered regions separated from one another, wherein this bar or these bars is/are surrounded by in each case a trough-like depression, which extends/extend around the bar and has/have a diameter in the range from preferably 1/20 to 1/1, more preferably from 1/10 to 1/3 of the diameter of the said non-covered regions,
wherein the design (i) may also be realised in combination with the design (ii) or the design (iii).

11. Detection system for the detection of different analytes in a sample or for the detection of one analyte in a plurality of samples, having a flat or essentially flat substrate surface and arrays of analyte-binding receptor molecules arranged on this plane, having the following components:
(a) a planar substrate having sensors for chemical, optical or electrical detection which are arranged on or in the surface of the substrate,
(b) a layer situated on this substrate, which is microstructured such that regions of the substrate separated from one another, on or in the surface of which the sensors are arranged, are not covered by the layer,
wherein layer and substrate are joined to one another at least around the non-covered regions in sealing manner, and
(c) analyte-binding receptor molecules which are situated on the surface of regions of the substrate which are not covered by the layer, and/or on the surface of sensors,
**characterised in that** either
(i) the layer applied to the substrate consists of a hydrophobic material and has a thickness of not more than 20 µm, preferably of not more than 10 µm, particularly preferably not more than 1 µm, or
(ii) the regions of the substrate separated from one another, which are not covered by the layer, have the form of microcapillary reactors, which are formed by two openings in the layer and a connection between these openings, wherein this connection is in contact with the substrate surface, or
(iii) the individual regions of the substrate separated from one another, which are not covered by the layer, are surrounded by one or more bars, the diameter of which is preferably from 1/20 to 1/1, more preferably 1/10 to 1/3 of the diameter of the non-covered regions separated from one another, wherein this bar or these bars is/are surrounded by in each case a trough-like depression, which extends/extend around the bar and has/have a diameter in the range from preferably 1/20 to 1/1, more preferably from 1/10 to 1/3 of the diameter of the said non-covered regions,
wherein the design (i) may also be realised in combination with the design (ii) or the design (iii).

12. Process for producing a detection system for the detection of different analytes in a sample or for the detection of one analyte in a plurality of samples, having a flat or essentially flat substrate surface and arrays of analyte-binding receptor molecules arranged on this surface, **characterised by** the following steps:
(a) provision of a planar or essentially planar substrate having sensors for the chemical, optical or electrical detection of the analytes which are arranged on or in the surface of the substrate,
(b) application of a layer to the substrate, which is either already microstructured, or application of a continuous layer to the substrate and microstructuring of the layer, in each case such that regions of the substrate separated from one another, on or in the surface of which the sensors are arranged, are not covered by the layer, wherein layer and substrate are joined to one another at least around the non-covered regions in sealing manner,
(c) contacting at least some of the non-covered regions with at least one liquid containing receptor molecules, such that the receptor molecules are able to adhere to the substrate surface and/or to the surface of the sensors or to bind thereto,
(d) removal of the non-adhering constituents of the liquid.

## Revendications

1. Procédé de fabrication d'un système de détection pour la détection de différents analytes dans un échantillon ou pour la détection d'un analyte dans plusieurs échantillons, avec une surface de substrat plane ou globalement plane et avec des réseaux, disposés sur cette surface, de molécules interceptrices liant des analytes, **caractérisé par** les étapes suivantes :
(a) fourniture d'un substrat plan ou globalement plan avec plus d'un capteur de détection chimique optique ou électrique des analytes qui sont disposés sur ou dans la surface du substrat,
(b) application d'une couche sur le substrat, laquelle est déjà microstructurée, ou application d'une couche continue sur le substrat et microstructuration de la couche, à chaque fois de telle sorte que des zones du substrat qui sont séparées les unes des autres et sur ou dans la surface desquelles des capteurs sont disposés ne sont pas recouvertes par la couche, la couche et le substrat étant assemblés de manière étanche au moins autour des zones non recouvertes,
(c) mise en contact d'au moins une partie des zones non recouvertes avec au moins un liquide contenant des molécules interceptrices de telle sorte que les molécules interceptrices sont capables d'adhérer ou d'être liées à la surface de substrat et/ou à la surface des capteurs,
(d) élimination des constituants du liquide qui n'adhèrent pas,
(e) élimination de la couche microstructurée ou de parties de cette couche.

2. Procédé selon la revendication 1, **caractérisé en ce que**, dans l'étape (b), les zones du substrat qui sont séparées les unes des autres et qui ne sont pas recouvertes par la couche reçoivent la forme de réacteurs microcapillaires qui sont formés par deux ouvertures dans la couche et par une liaison entre ces ouvertures, cette liaison étant en contact avec la surface de substrat.

3. Procédé selon l'une des revendications 1 ou 2, **caractérisé en ce que** les différentes zones du substrat obtenues dans l'étape (b), qui sont séparées les unes des autres et qui ne sont pas recouvertes par la couche, sont entourées d'une ou plusieurs traverses dont le diamètre vaut de 1/20 à 1/1, de préférence 1/10 à 1/3, du diamètre des zones séparées les unes des autres et non recouvertes, cette traverse ou ces traverses étant entourées à chaque fois par un creux du type tranchée qui s'étend autour de la traverse et qui a un diamètre compris entre 1/20 et 1/1, de préférence entre 1/10 et 1/3, du diamètre des zones non recouvertes mentionnées.

4. Procédé selon l'une des revendications précédentes, **caractérisé en ce que**, dans l'étape (b), un polymère organique ou partiellement organique ou ses états préalables est appliqué sur le substrat et est structuré au moyen de procédés lithographiques et/ou procédés de gravure.

5. Procédé selon l'une des revendications 1 à 3, **caractérisé en ce que**, dans l'étape (b), une couche en un polymère autoporteur, de préférence une feuille de polymère, un film de polymère ou une mince plaque de polymère, qui a déjà été microstructurée auparavant ou qui est microstructurée sur le substrat, est fixée sur le substrat.

6. Procédé selon l'une des revendications 1 à 3, **caractérisé en ce que**, dans l'étape (b), une couche en un matériau anorganique, par exemple une plaque de silicium, de verre, de métal ou de céramique, qui a été microstructurée auparavant, par exemple estampée ou structurée par photolithographie, est fixée sur le substrat.

7. Procédé selon la revendication 5 ou 6, **caractérisé en ce que** la fixation s'effectue à l'aide d'un adhésif redétachable ou par thermosoudage avec un polymère ou par soudage au laser.

8. Procédé selon l'une des revendications 5 à 7, **caractérisé en ce que** la couche a été munie d'empreintes, en plus, avant la fixation sur le substrat.

9. Procédé selon l'une des revendications précédentes, **caractérisé en ce que**, dans l'étape (e), la couche structurée est détachée de façon mécanique ou chimique, par exemple avec un solvant.

10. Système de détection pour la détection de différents analytes dans un échantillon ou pour la détection d'un analyte dans plusieurs échantillons, avec une surface de substrat plane ou globalement plane et avec des réseaux disposés sur cette surface et prévus pour des molécules interceptrices liant des analytes, avec les éléments suivants :
(a) un substrat plan avec des capteurs destinés à la détection chimique, optique ou électrique et disposés sur ou dans la surface du substrat,
(b) une couche qui se trouve sur ce substrat et qui est microstructurée de telle sorte que des zones du substrat qui sont séparées les unes des autres et sur ou dans la surface desquelles les capteurs sont disposés ne sont pas recouvertes par la couche, la couche et le substrat étant assemblés de manière étanche au moins autour des zones non recouvertes,
**caractérisé en ce que**
(i) soit la couche appliquée sur le substrat est en un matériau hydrophobe et a une épaisseur de 20 µm au maximum, de préférence de 10 µm au maximum, et encore plus de préférence de 1 µm au maximum,
(ii) soit les zones du substrat qui sont séparées les unes des autres et qui ne sont pas recouvertes par la couche ont la forme de réacteurs microcapillaires qui sont formés par deux ouvertures dans la couche et par une liaison entre ces ouvertures, cette liaison étant en contact avec la surface de substrat,
(iii)soit les différentes zones du substrat qui sont séparées les unes des autres et qui ne sont pas recouvertes par la couche sont entourées d'une ou plusieurs traverses dont le diamètre vaut de préférence de 1/20 à 1/1, encore plus de préférence 1/10 à 1/3, du diamètre des zones séparées les unes des autres et non recouvertes, cette traverse ou ces traverses étant entourées à chaque fois par un creux du type tranchée qui s'étend autour de la traverse et qui a un diamètre compris de préférence entre 1/20 et 1/1, encore plus de préférence entre 1/10 et 1/3, du diamètre des zones non recouvertes mentionnées,
la conception (i) pouvant aussi être réalisée en combinaison avec la conception (ii) ou avec la conception (iii).

11. Système de détection pour la détection de différents analytes dans un échantillon ou pour la détection d'un analyte dans plusieurs échantillons, avec une surface de substrat plane ou globalement plane et avec des réseaux disposés sur cette surface et prévus pour des molécules interceptrices liant des analytes, avec les éléments suivants :
(a) un substrat plan avec des capteurs destinés à la détection chimique, optique ou électrique et disposés sur ou dans la surface du substrat,
(b) une couche qui se trouve sur ce substrat et qui est microstructurée de telle sorte que des zones du substrat qui sont séparées les unes des autres et sur ou dans la surface desquelles les capteurs sont disposés ne sont pas recouvertes par la couche, la couche et le substrat étant assemblés de manière étanche au moins autour des zones non recouvertes, et
(c) des molécules interceptrices qui lient des analytes et qui se trouvent sur la surface de zones de substrat non recouvertes par la couche et/ou sur la surface de capteurs,
**caractérisé en ce que**
(i) soit la couche appliquée sur le substrat est en un matériau hydrophobe et a une épaisseur de 20 µm au maximum, de préférence de 10 µm au maximum, et encore plus de préférence de 1 µm au maximum,
(ii) soit les zones du substrat qui sont séparées les unes des autres et qui ne sont pas recouvertes par la couche ont la forme de réacteurs microcapillaires qui sont formés par deux ouvertures dans la couche et par une liaison entre ces ouvertures, cette liaison étant en contact avec la surface de substrat,
(iii)soit les différentes zones du substrat qui sont séparées les unes des autres et qui ne sont pas recouvertes par la couche sont entourées d'une ou plusieurs traverses dont le diamètre vaut de préférence de 1/20 à 1/1, encore plus de préférence 1/10 à 1/3, du diamètre des zones séparées les unes des autres et non recouvertes, cette traverse ou ces traverses étant entourées à chaque fois par un creux du type tranchée qui s'étend autour de la traverse et qui a un diamètre compris de préférence entre 1/20 et 1/1, encore plus de préférence entre 1/10 et 1/3, du diamètre des zones non recouvertes mentionnées,
la conception (i) pouvant aussi être réalisée en combinaison avec la conception (ii) ou avec la conception (iii).

12. Procédé de fabrication d'un système de détection pour la détection de différents analytes dans un échantillon ou pour la détection d'un analyte dans plusieurs échantillons, avec une surface de substrat plane ou globalement plane et avec des réseaux, disposés sur cette surface, de molécules interceptrices liant des analytes, **caractérisé par** les étapes suivantes :
(a) fourniture d'un substrat plan ou globalement plan avec des capteurs qui sont destinés à la détection chimique optique ou électrique des analytes et qui sont disposés sur ou dans la surface du substrat,
(b) application d'une couche sur le substrat, laquelle est déjà microstructurée, ou application d'une couche continue sur le substrat et microstructuration de la couche, à chaque fois de telle sorte que des zones du substrat qui sont séparées les unes des autres et sur ou dans la surface desquelles des capteurs sont disposés ne sont pas recouvertes par la couche, la couche et le substrat étant assemblés de manière étanche au moins autour des zones non recouvertes,
(c) mise en contact d'au moins une partie des zones non recouvertes avec au moins un liquide contenant des molécules interceptrices de telle sorte que les molécules interceptrices sont capables d'adhérer ou d'être liées à la surface de substrat et/ou à la surface des capteurs,
(d) élimination des constituants du liquide qui n'adhèrent pas.
